# EUROPEAN PATENT APPLICATION

(11) **EP 1 176 531 A1**
(43) Date of publication of application: **30.01.2002**
(21) Application number: 01305916.7
(22) Date of filing: 09.07.2001
(51) Int. Cl.: G06F 17/60

(54) **System and method for assisting user shopping over computer networks**

(30) Priority: 17.07.2000 US 617496; 17.07.2000 US 618100; 17.07.2000 US 618096
(71) Applicant: International Business Machines Corporation, Armonk, NY 10504 (US)
(72) Inventor: Lee, Juhnyoung, Winchester, Hampshire SO21 2JN (GB); Kalagnanam, Jayant R., Winchester, Hampshire SO21 2JN (GB); Davenport, Andrew J., Winchester, Hampshire SO21 2JN (GB); Lee, Ho Soo, Winchester, Hampshire SO21 2JN (GB); Leung, Ying Tat, Winchester, Hampshire SO21 2JN (GB)
(74) Representative: Burt, Roger James, Dr.

(57) **Abstract**

A computer system and method generates one or more virtual wish lists of one or more users over one or more networks. The computer system and method also provides a shopping assistant over a computer network for either An online store or a physical store. The system and method includes using user information gathered from one or more stores, one or more databases and the like to create the virtual wish list. The virtual list can be searched and retrieved in order to purchase the product. The system and method also is capable of providing a recommended list of products when a certain other product cannot be found in the online store.

## Description

The present invention generally relates to shopping over a computer network and, more particularly, to providing user information including recommendations about a user's needs and tastes by collecting and analysing user data.

Commerce over networks, particularly e-commerce over the Internet, has increased significantly over the past few years. Part of e-commerce enables users/customers to access information of products and to purchase them from various commercial Web sites (i.e., online stores). There are numerous online stores currently operating in the Internet including. Amazon.com, Buy.com, Wal-Mart.com, LLBean.com, and Macys.com. These online stores provide various customer services to make commerce activities possible and easier over Web sites. Some of the examples of the basic services are catalogues of merchandise which are both browsable and searchable by various product attributes (e.g., keyword, name, manufacturer, and model number), online shopping carts, and checkout processes. Some online stores also provide advanced customer services such as wish lists, gift registries, calendars, custom-configuration of products, buyers groups, chatting, e-mail notification, and in-context sales.

A *wish list* is a shopping tool available in a number of online stores including Amazon.com, Eddiebauer.com, and Sears.com. A user can create a wish list in an online store and record information on products the user wants to buy from the store in the list. The store keeps the product information for a definite period of time, e.g., a year. The user can access the list anytime and make one or more transactions for purchasing one or more products stored in the list. Some online stores such as Amazon.com extend their shopping cart service to provide the wish list capability to some degree. However, such shopping carts store the product information for a shorter period of time, e.g., ninety days. A wish list helps its users purchase a product bundle at one time from an online store. Also, a wish list helps other people such as friends and family purchase one or more products that match with needs and tastes of the wish list user by referring to information stored in the wish list, as seen in Macys.com's Bridal Registry program which is a variation of a wish list service.

A *gift registry* is another popular shopping tool provided by several online stores including Macys.com and JCPenny.com. A user (or a group of users, e.g., a marrying couple) can create a gift registry account for a special occasion such as wedding, anniversary, pregnancy, holiday, birthday, or graduation in an online store and collect a list of products the user wants to receive as gifts. Other people (e.g., the gift registry owner's friends and relatives) can access the gift registry list by using the owner's personal information such as an owner's name(s) and an occasion date, examine products stored in the list, and purchase one or more products in the list for the owner. A gift registry helps its users obtain a group of products for a special occasion, but it is different from the present invention primarily because it requires the user to choose a list of products to buy. A gift registry does not select products optimised for various constraints though it may provide the users with some information useful for the selection. Also, it requires the users, friends and relatives to access the registries and purchase one or more products in the list.

A *gift finder* is another shopping tool provided by online stores such as Eddiebauer.com. A gift finder is a parametric search program customised for selecting gifts. That is, a gift finder provides users with a set of parameters (e.g., gift recipients' sex and age, occasion, and price range), and their possible values (e.g., wedding, birthday, or anniversary for the occasion parameter). A user can select values for one or more of the given parameters to find products of interest available in the online store. A gift finder can be used to select a group of products which possibly satisfy the selected values for the given parameters. However, a gift finder requires the parameter values set for each gift product, and so it requires multiple searchers, to select a group of products. Also, gift finders usually come with only a small number of parameters which generally fit in various types of occasions, and so they can hardly cover diverse constraints of individual shopping cases.

A *gift-click* is a new shopping tool served by Amazon.com. When a user finds in an online store a product which the user wants to send as a gift to a person the user knows, the user purchases the product and provides the person's e-mail address to the store. Then the store contacts the person via e-mail to arrange delivery, i.e., confirm if the person intends to accept the gift, find the person's mailing address and send out the gift. This tool helps the user send gifts to other people, but it does not help users select a group of products optimised for a set of given constraints.

Another prior art area of interest is *constraint-based configuration programming* which was recently developed from the field of artificial intelligence. A constraint-based configuration provides a rich representation for expressing relationships and constraints between objects, as well as efficient techniques for constraint propagation and enumeration of solutions. Constraint-based configuration technology allows the online product catalogue to be represented declaratively by a hierarchy of dynamic classes, each corresponding to a product type. For each item choice, the input profile specifies a possible domain, or list of items in the product catalogue which can match this profile. Constraint-based optimisation provides for fast and efficient algorithms for generating lists of recommended products for each item choice which satisfy all the shopping list constraints.

A wish list service of the prior art requires the users to register to the online store that provides the service. Registration to an online store is often tedious and is an error-prone process. Furthermore, if a user wants to maintain multiple wish lists in different online stores, the person needs to register multiple times to those online stores.

A wish list service of the prior art also requires the users to add one or more products they wish to buy to the list. If a user does not actually add a product to his or her wish list, the user does not have a record of the product in his or her wish list, even though he or she is interested in buying this particular product.

Additionally, a wish list service of the prior art limits the selection of products that can be added to the wish lists to ones sold or provided in the online store that provides the service. This limitation on product selection sometimes forces users to create multiple wish lists in different online stores. For example, a user may need a wish list for books and another wish list for shoes. Maintaining multiple wish lists is often a difficult and tedious task for online users. The requirement of multiple store registration adds more difficulty to the task.

Lastly, a wish list service of the prior art does not help select a list of products optimised for various constraints such as budget and product preferences. In fact, a wish list service of the prior art does not even allow a user to specify any constraint regarding shopping, at all.

The present invention seeks to alleviate shortcomings of the prior art by providing, in part, a new shopping tool called a virtual wish list. The virtual wish list overcomes several limitations in using (actual) wish lists, and extends the prior art's functions in at least one significant way. Unlike actual wish lists, the virtual wish list tool does not require the users to register to online stores for the service. Also, it does not require the users to add products to buy to their wish lists. In addition, it does not limit the product selection to ones that are sold or provided in one particular online store. Instead, the present invention automatically creates and maintains information of products the users are interested in by observing users' visits to product Web pages in different online stores or the physical store. Furthermore, the tool can help shopping for multiple products and multiple people at a time and selecting a list of products optimised for various constraints such as budget and product preferences. This invention further describes a method of implementation.

According to a first aspect of the present invention, a computer system is provided for generating one or more virtual wish lists of one or more users over one or more networks, the system comprising: one or more central processing units (CPUs), one or more memories, and one or more network interfaces to one or more networks; one or more Web page request tracking processes that are invoked each time a product Web page embedding the process is requested by a user, and capture information about the user's identity, product identity, store identity, and a time of a request in a tracked Web page request entry; one or more Web tracker processes that receive one or more tracked Web page request entries from one or more online stores, and store the tracked Web page request entries in one or more Web logs; one or more virtual wish list generating processes that receive one or more Web logs from one or more Web tracker processes, group tracked Web page requests in the Web logs by user, create and/or update virtual wish lists for the users found in the Web logs by merging user navigation data with one or more set of auxiliary data and historical navigation data of the user, and store created and/or updated virtual wish lists in one or more databases for future queries for product recommendations; one or more virtual wish list approval request processes that ask a user for use of the user's virtual wish list by other users, one or more online stores, and one or more other Web sites; and one or more virtual wish list approval processes that allow an owner of a virtual wish list to modify the virtual wish list if necessary, and to selectively approve the use of the virtual wish list by other users, one or more online stores, and one or more other Web sites.

According to a second aspect of the present invention, a computer system is provided for using one or more virtual wish lists of one or more users over one or more networks, the system comprising: one or more central processing units (CPUs), one or more memories, and one or more network interfaces to one or more networks; one or more recipient list generating processes that extract information about one or more people from one or more online address books and/or other personal database systems, and create one or more lists of people for whom the user wants to purchase one or more products; one or more recipient list updating processes that receive one or more recipient lists from one or more users, and modify them if necessary to reflect data stored in one or more actual wish lists, and/or to reflect merchandising efforts of one or more online store; one or more shopping list generating processes that receive one or more virtual wish lists of one or more product recipients, and create one or more shopping lists for the product recipients; one or more virtual wish list retrieval processes that receive one or more product recipient lists from one or more users or one or more online stores, and retrieve and search for virtual wish lists for the product recipients from one or more databases; one or more recommended product list generating processes that receive one or more recipient lists, one or more virtual wish lists, and one or more shopping lists from one or more users, one or more online stores, and one or more virtual wish list retrieval processes, and create one or more recommended product lists; one or more virtual list use approval request processes that ask a user of the use of the user's virtual wish list by other users, one or more online stores, and one or more other Web sites; and one or more virtual list use approval processes that allows the owner of a virtual wish list to modify the virtual wish list if necessary and to selectively approve the use of the virtual wish list by other users, one or more online stores, and one or more other Web sites.

According to a third aspect of the present invention, a computer system is provided for providing one or more lists of product combinations to one or more users over one or more networks, the system comprising: one or more central processing units (CPUs), one or more memories, and one or more network interfaces to one or more networks; an electronic shopping assistant process which receives one or more inputs of constraints from users, sends out the inputs to one or more shopping list generating processes in one or more stores, receives one or more lists of recommended product combinations that satisfy the given constraints, and allows users to view and select one or more product combinations from received lists; and a shopping list generating process which receives one or more inputs from the electronic shopping assistant process by using an electronic shopping list protocol, searches products in an online product catalogue stored in a product database, computes one or more lists of product combinations that satisfy the constraints given in the input, and sends lists of product combinations back to the electronic shopping assistant process again by using the electronic shopping list protocol.

According to an aspect of the invention, there is provided a computer system for generating one or more virtual wish lists of one or more users over one or more networks. The system comprises one or more central processing units (CPUs), one or more memories, and one or more network interfaces to one or more networks. One or more Web page request tracking processes are invoked each time a product Web page embedding the process is requested by a user, and capture information about the user's identity, product identity, store identity, and a time of a request in a tracked Web page request entry. One or more Web tracker processes receive one or more tracked Web page request entries from one or more online stores, and store the tracked Web page request entries in one or more Web logs. One or more virtual wish list generating processes receive one or more Web logs from one or more Web tracker processes, group tracked Web page requests in the Web logs by user, create and/or update virtual wish lists for the users found in the Web logs by merging user navigation data with one or more set of auxiliary data and historical navigation data of the user, and store created and/or updated virtual wish lists in one or more databases for future queries for product recommendations. One or more virtual wish list approval request processes ask a user for use of the user's virtual wish list by other users, one or more online stores, and one or more other Web sites. One or more virtual wish list approval processes allow an owner of a virtual wish list to modify the virtual wish list if necessary, and to selectively approve the use of the virtual wish list by other users, one or more online stores, and one or more other Web sites.

In another aspect of the present invention, one or more recipient list generating processes extract information about one or more people from one or more online address books and/or other personal database systems, and create one or more lists of people for whom the user wants to purchase one or more products. One or more recipient list updating processes receive one or more recipient lists from one or more users, and modify them if necessary to reflect data stored in one or more actual wish lists, and/or to reflect merchandising efforts of one or more online store. One or more shopping list generating processes receive one or more virtual wish lists of one or more product recipients, and create one or more shopping lists for the product recipients. One or more virtual wish list retrieval processes receive one or more product recipient lists from one or more users or one or more online stores, and retrieve and search for virtual wish lists for the product recipients from one or more databases. One or more recommended product list generating processes receive one or more recipient lists, one or more virtual wish lists, and one or more shopping lists from one or more users, one or more online stores, and one or more virtual wish list retrieval processes, and create one or more recommended product lists. One or more virtual list use approval request processes ask a user of the use of the user's virtual wish list by other users, one or more online stores, and one or more other Web sites. One or more virtual list use approval processes allows the owner of a virtual wish list to modify the virtual wish list if necessary and to selectively approve the use of the virtual wish list by other users, one or more online stores, and one or more other Web sites.

In still another aspect of the present invention, an electronic shopping assistant process receives one or more inputs of constraints from users, sends out the inputs to one or more shopping list generating processes in one or more stores, receives one or more lists of recommended product combinations that satisfy the given constraints, and allows users to view and select one or more product combinations from the given lists. A shopping list generating process receives one or mote input from the electronic shopping assistant process by using an electronic shopping list protocol, searches products in an online product catalogue stored in a product database, computes one or more lists of product combinations that satisfy the constraints given in the input, and sends the lists of product combinations back to the electronic shopping assistant process again by using the electronic shopping list protocol.

The electronic shopping assistant according to the invention enhances cyber-shopping by providing a new suite of shopping tools which allows for the development of a new and enriching relationship between the customer and retailer. The electronic shopping assistant provides customers the facility of examining the catalogue using preference filters, creating gift lists (e.g., for the Christmas season) in a semi-automated way and using financial instruments such as limit orders to minimise cost for a item bundle of interest. The retailers benefit enormously in that these tools elicit from customers the price point for various items thereby providing a wealth of information for scheduling promotions and sales to maximise profit.

The target owner of electronic shopping assistant (the store) is a retailer in any segment, such as, for example:
An online, Web-based direct marketer; or
A traditional brick-and-mortar store with an electronic, online catalogue available to the customers, such as that in kiosks or in electronic store directories.

The electronic shopping assistant is provided to the users (the end users) to enhance the value-add of the store by, for example:
Providing a convenient shopping service to save customers time and effort; and
Enhancing the overall shopping experience.

Additionally, the business benefits of the electronic shopping assistant to the store include:
Providing a new way to selectively promote the products carried, which is in addition to and can be used simultaneously with the traditional ways of promotion such as advertising, markdowns, or in-store displays;
Providing store differentiation and competitive advantage. This is because the service of the present invention would be difficult to duplicate for stores without an electronic, online product catalogue; and
Taking advantage of the unique capabilities of an electronic product catalogue and enhances the return in investing in developing such a catalogue.

For a better understanding of the invention reference will now be made, by way of example, to the accompanying drawings, in which:
Figure 1 is block diagram of one preferred system architecture for using virtual wish lists;
Figure 2 is a flow chart of a preferred business process for using virtual wish lists;
Figure 3 is a block diagram of another preferred system architecture for using virtual wish lists;
Figure 4 is a flow chart of another preferred business process for using virtual wish lists;
Figure 5 is a block diagram of one preferred system architecture for generating virtual wish lists;
Figure 6 is a flow chart of a preferred business process for generating virtual wish lists;
Figure 7 is a block diagram showing an online address book and a recipient list;
Figure 8 is a block diagram showing actual wish lists of an online store;
Figure 9 is a block diagram showing virtual wish lists;
Figure 10 is a block diagram showing user navigation data;
Figure 11 is a block diagram showing a shopping list;
Figure 12 is a block diagram showing a recommended product list;
Figure 13 is a block diagram showing merchandising data;
Figure 14 is a block diagram showing a product Web page embedding a tracking device;
Figure 15 is a block diagram showing a Web log;
Figure 16 is a block diagram showing a Web log grouped by user;
Figure 17 is a block diagram showing auxiliary user data;
Figure 18 is a block diagram of one preferred system architecture according to the invention;
Figure 19 is a block diagram of one preferred system architecture which used handheld shopping assistants;
Figure 20 is a flow chart showing the overall business process;
Figure 21 is a flow chart showing the logic of the shopping list generator process which creates one or more recommended product lists;
Figure 22 is a flow chart showing the business process for generating a recommended list of products in which the list of products satisfy the profile constraints but not all combinations of choices satisfy the shopping list constraints, requiring interactive selection by the user;
Figure 23 is a flow chart of the business process generating a recommended list of products in which the list of products satisfy the profile constraints and all the combinations of choices satisfy the shopping list constraints, allowing the user to select a single combination of products; and
Figure 24 is an example of product records stored in the database of a store server.

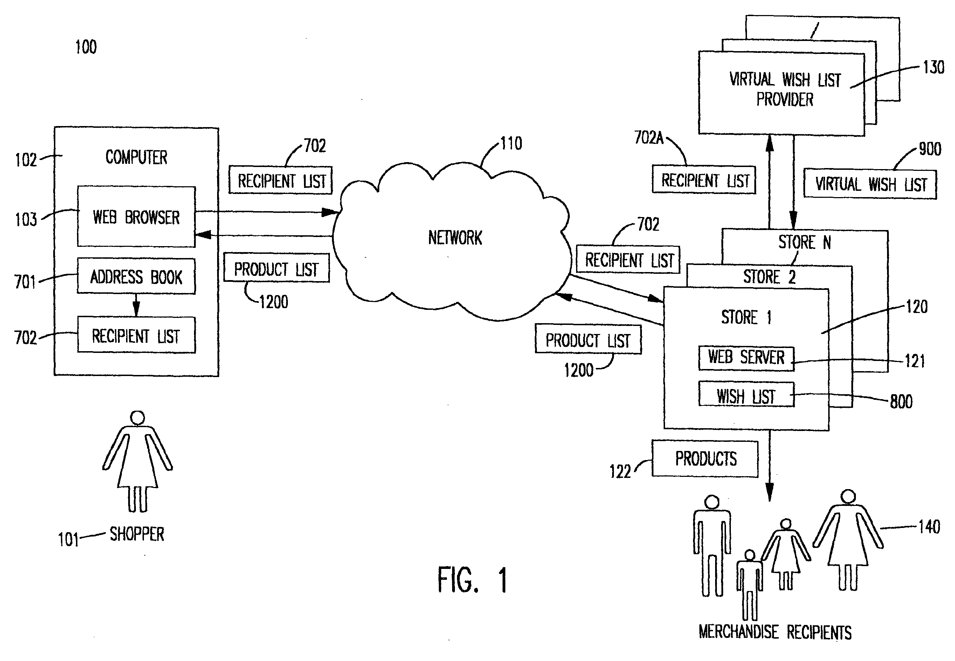

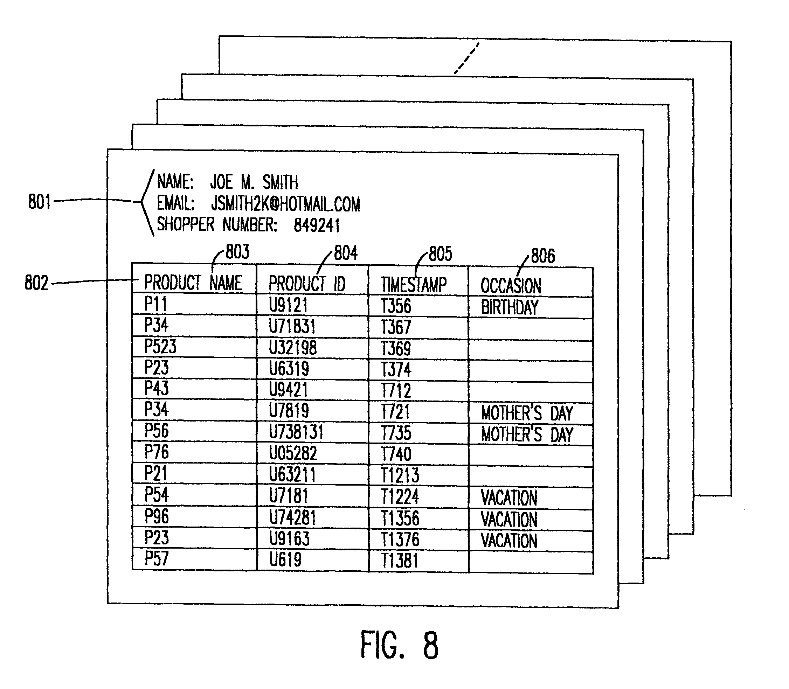

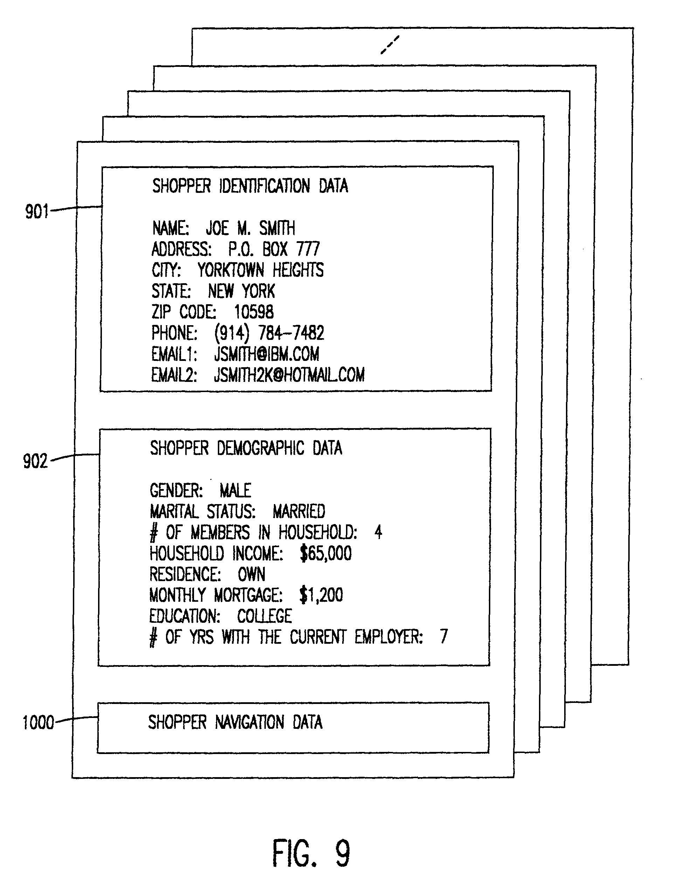

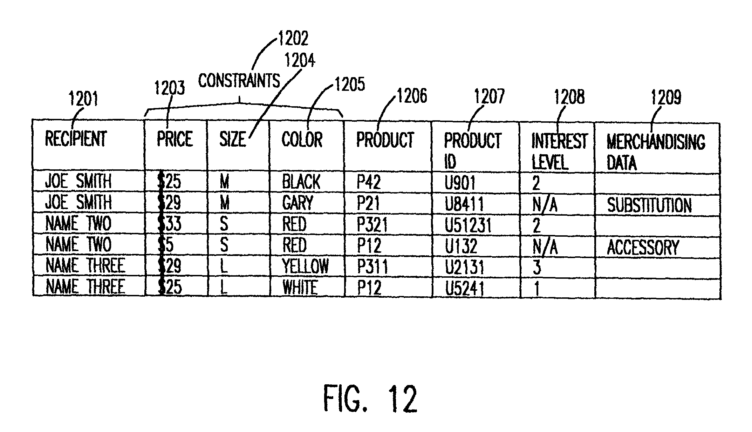

Referring now to the drawings, and more particularly to Figure 1, there is shown a block diagram of one preferred system architecture for using virtual wish lists. The system architecture shows one or more users 101, one or more computers 102 used by the users, one or more Web browser programs 103 used by the users, one or more online address books 701, one or more recipient lists 702, a computer network 110, one or more online stores 120 in the network, one or more Web server programs 121 used by the online stores, one or more actual wish lists 800 (shown in more detail in Figure 8) used by the online stores, one or more virtual wish lists 900 (shown in more detail in Figure 9), one or more virtual wish list providers 130, one or more recommended product list 1200 (shown in more detail in Figure 12), one or more product recipients 140, and one or more products sent to the recipients 122.

When a user 101 intends to purchase and/or receive information of one or more products by using a computer network 110 such as the Internet, the user starts a Web browser program 103 in his or her computer 102 and visits one or more online stores 120 in the network 110 which sell the products of interest. Individual online stores 120 are implemented with a Web server system 121 which receives Web page requests from users 101 and sends out requested Web pages back to the users 101. For this communication, Web browser programs 103 and Web server systems 121 typically use HTTP (HyperText Transfer Protocol) which is a network protocol defined for this purpose and used in the Internet.

When a user 101 intends to purchase and/or receive information of one or more products from an online store 120 over a computer network 110, the user accesses the online store 120 from his or her Web browser program 103 and requests one or more Web pages that describe one or more products provided by the online store. To request Web pages describing products, the user 101 uses one or more methods the online store 120 provides for finding product information (called *shopping metaphors*) including hierarchical browsing by following hyperlinks, a keyword-based product search, a parametric search, and a build-to-order product configuration. When receiving a Web page request from a user 101, the Web server 121 of the online store 120 generates the Web page and sends it to the user. The user 101 examines information shown in the received product Web page, and continues his or her shopping, i.e., requesting one or more Web pages describing products, placing one or more products in his or her online shopping cart, moving to the checkout process, and/or leaving the online store.

Some online stores 120 provide various services for users who intend to purchase one or more products for one or more other people. Wish lists 800 is one example of such services. A user can visit an online store which provides a wish list service, register for the wish list service, and add one or more products supplied by the store to his or her wish list. The user allows others who are interested to know how to access his or her wish list in the online store 120. If a user wants to purchase one or more products (e.g., as gifts) for the wish list owner, the user can visit the online store 120, access the wish list, and purchase one or more products in the wish list 800 for the owner.

The invention presents virtual wish lists 900 that assist the users 101 to purchase products 122 which match with tastes and/or needs of receivers 140 of the products. Unlike the actual wish list 800 described above, the virtual wish list 900 does not require the owner to register to a particular online store. A virtual wish list 900 is automatically created, and it keeps information of products its owner is interested in by using the information collected from Web pages the person requests and examines in the Internet. Even when no actual wish list 800 exists for a online user, a virtual wish list for the user can be created and used. Also, unlike the actual wish list 800, products recorded in the virtual wish list 900 are not limited to ones sold/provided in one particular online store. There can be multiple actual wish lists 800 for an online user, one for each different online store the user visits, for example, one wish list for an online book store and another List for a shoe store. However, the content of multiple actual wish lists of a user can be merged into one virtual wish list 900 which provides information about products its owner is interested in buying along with stores where the products are sold.

A user or user 101 of virtual wish lists 900 first creates a recipient list 702 in one way or another, e.g., from his or her online address book 701. The user 101 sends out the recipient list 702 to an online store 120 of his or her choice. If the online store 120 finds an actual wish list 800 of one or more persons in the recipient list 702, then it uses the List 800 for selecting one or more products for the person. In any case, the store 120 can request one or more virtual wish lists 900 of one or more persons in the recipient list 702 to the virtual wish list provider 130. When receiving the virtual wish lists 900, the store creates a product list 1200 that matches with the recipient list 702 and sends it back to the user 101. The user 101 examines the product list 1200 and completes one or more transactions if desired. For the transactions completed by the user 101, the store 120 sends out one or more of the purchased products 122 to one or more recipients 140.

If the virtual wish list 900 recommends one or more products that the store 120 does not sell or provide, the store can either recommend one or more products which are substitutable for the original products in the virtual wish list 900, or suggest one or more stores which sell or provide the products, so that the user can visit the suggested stores for completing-the transaction. Another possibility is to have a portal Web site for shopping using virtual wish lists. In this setup, users 101 visit the portal Web site for, say, gift shopping. This portal Web site provides the users 101 with virtual wish lists 900 (by using the service of virtual wish list providers 130) and product information (i.e., product list 1200) with store links, while not directly providing the checkout process for transaction completion. Users 101 visit stores by following the links provided by the portal Web site for completing transactions.

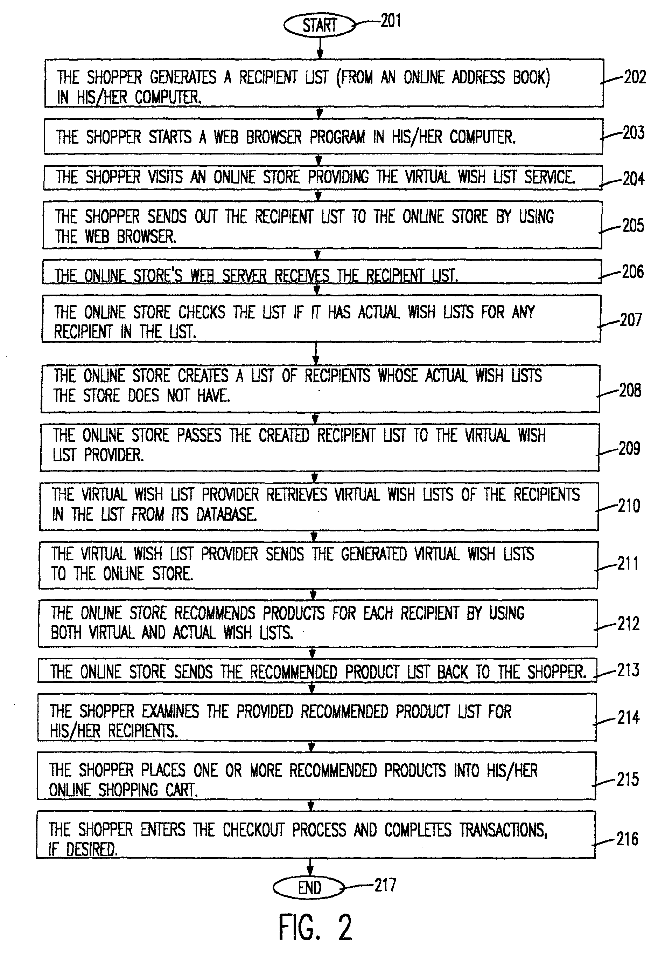

Figure 2 is a flow chart of a preferred business process for using virtual wish lists. The first step 202 of this process is that the user 101 makes a list 702 of one or more recipients 140 of products. There are many different ways to create this list 702. The user 101 can manually create it by referring to one or more of his or her paper address books. Alternatively, the user 101 can create the list 702 by using one or more of his or her online address books 701 or personal databases on his or her computer or handheld devices. Also, the user 101 can use both online and paper address books at the same time to create recipient lists 702. When using online address books, the user 101 may use a certain software program that helps generating recipient lists 702 by guiding the user 101 in making selections and automatically retrieving relevant data from one or more online address books 701. Alternatively, the user can use an editor program and cut-and-paste data from address books to create a recipient list 702.

Once the user 101 is ready to shop for recipients in the list 702, the next step 203 is that the user starts a Web browser program 103 in his or her computer 102. Then, the user visits an online store 120 (or a shopping portal Web site) which provides a virtual wish list service in step 204. Next, in step 205, the user 101 sends out the prepared recipient list 702 to the online store 120 by using the Web browser program 103 and the network 110. In this step 205, the user 101 may need to modify the prepared recipient list 702 to comply with the form required by the online store 120. Also, the user may add to the recipient list 702 certain criteria for selecting information to be included in product recommendation 1200 such as time period of interest one or more product categories of interest, one or more stores of interest, and price range of interest.

When the online store 120 receives the recipient list 702 from the user 101 by using its Web server 121 and the network 110, first, in step 207, the store may check the list 702 to see if it has one or more actual wish lists 800 for one or more recipients in the list 702. If the store 120 has some, it may not need to request virtual wish lists for the recipients, because the store has data necessary to make product recommendation for the recipients. Alternatively, the store 120 may include even those recipients in the virtual wish list request to broaden the range of recommendation. Based on its policy regarding this matter, the store 120 creates a recipient list 702A for requesting virtual wish lists in step 208, and passes it to one or more virtual wish list providers in step 209. At this point, the store may add to the recipient list 702A certain criteria for selecting information to be included in virtual wish lists 900 such as time period of interest, one or more product categories of interest, one or more stores of interest, and price range of interest. Also, if the store 120 requests virtual wish lists from more than one virtual wish list provider 130, it may send either the whole recipient list or a partial list to each virtual wish list provider 130. For partial lists, the store 120 needs to decide how to map recipients and virtual wish list providers 130.

When a virtual wish list provider 130 receives the recipient list 702A from the online store 120, it retrieves virtual wish lists 900 from its database for the recipients in the list 702A. Depending on the data structure and data retrieval methods, the retrieval and/or search of virtual wish lists from the database may take many different forms. Also, various information selection criteria added by the user 101 and the online store 120 to the recipient list 702 and 702A will be taken into account in this data retrieval and/or search process both before and after the retrieval and/or search in step 210. The virtual wish lists retrieved from the database may need to be adjusted for these criteria. Then, in step 211, the virtual wish list provider 130 sends the generated virtual wish lists 900 to the requesting online store 120.

When the online store 120 receives virtual wish lists 900 from all the providers 130 it sent the requests (i.e., recipient lists 702 and 702A) to, it prepares a list of product recommendations 1200 for recipients in step 212. If the store 120 receives more than one virtual wish lists 900 for a recipient from one or more virtual wish list provider 130, it needs to aggregate the lists into one link. Also, if the store 120 has both actual and virtual wish lists for a recipient, it needs to merge the link. If the store 120 receives no virtual wish list for a recipient, it may need to recommend products for the recipient by using some other technique.

Alternatively, the store 120 may notify the user 101 that there is no information available for the recipient. Also, when the store 120 makes a recommended product list for recipients, it can add to the list auxiliary product information for cross-sell which markets one or more products complementary in function to a selected product, up-sell which markets one or more products similar but more upscale than a selected product, accessory which markets one or more products accessorizing a selected product, substitution which markets one or more products substituting a selected product, and promotion which markets one or more products for liquidation or testing. When the recommended product list 1200 is prepared, the store 120 sends it to the user in step 213.

When the user 101 receives the product list 1200 of recommended products for his or her recipients 140, the user examines the recommended products in step 214, places one or more recommended products into his or her online shopping cart in step 215, enters the check-out process and completes transactions, if desired, in step 216. If the online store 120 does not sell one or more recommended products, or if it is a portal Web site that provides the virtual wish list service, the product list will provide one or more links to stores which sell the product. The user 101 can access the store by using the link, and completes necessary steps for purchase.

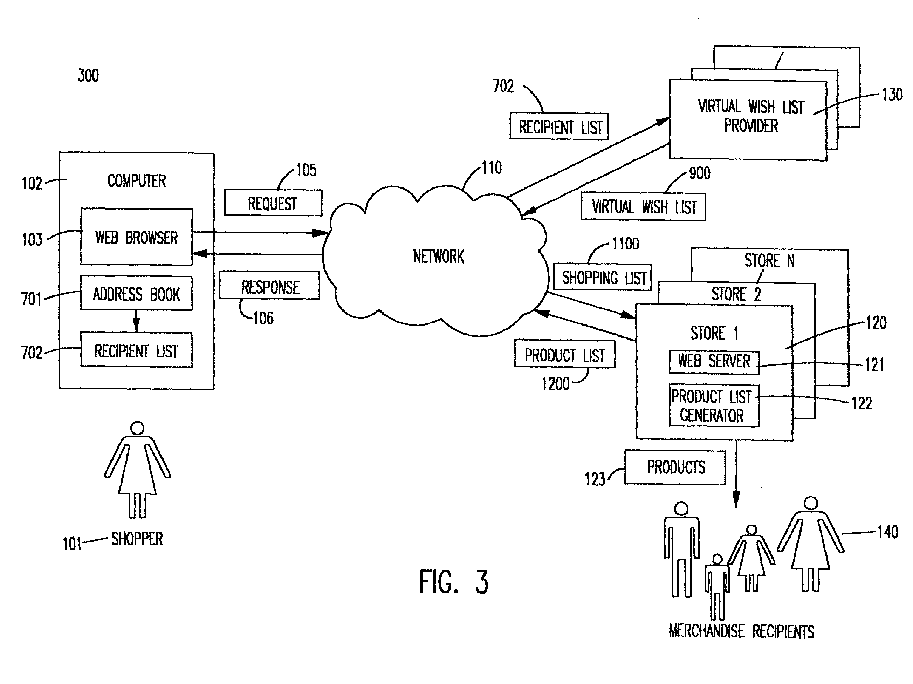

Figure 3 is a block diagram of another preferred system architecture for using virtual wish lists showing one or more users 101, one or more computers 102 used by the users, one or more Web browser programs 103 used by the users, one or more online address books 701, one or more recipient lists 702, one or more requests 105, one or more responses 106, a computer network 110, one or more online stores 120 in the network, one or more Web server programs 121 used by the online stores, one or more product list generator 122 used by the online store, one or more virtual wish lists 900, one or more virtual wish list providers 130, one or more shopping list 1100, one or more recommended product list 1200, one or more product recipients 140, and one or more products sent to the recipients 123.

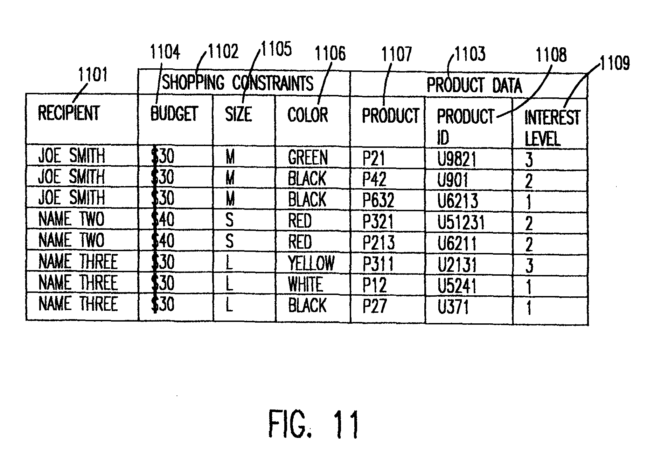

The system architecture depicted in Figure 3 is similar to the system architecture shown in Figure 1. One difference is that in this architecture, users 101 can directly request virtual wish lists 900 from one or more providers 130 instead of going through online stores or shopping portal Web sites for virtual wish list services. This architecture assumes that the virtual wish list providers 130 are connected to the network 110 by using Web protocols. The intention is to illustrate how the present invention of virtual wish lists can be used together with the invention of product list generator. The product list generator program 122 receives as input one or more shopping lists that include a number of products to shop along with various constraints in terms of budget, individual price, inter-product relationship, and so on, and generates as output a list of recommended products that satisfies the given constraints. With these two major differences, requests 105 sent out by the users 101 can be recipient lists 702 (going to the virtual wish list providers 130) or shopping lists 1100 (i.e., going to the online stores 120). Shopping lists 1100 are shown in more detail in Figure 11. Also, responses 106 received by the users 101 can be virtual wish lists 900 (coming from the virtual wish list providers 130) or recommended product lists 1200 (coming from the online stores 120).

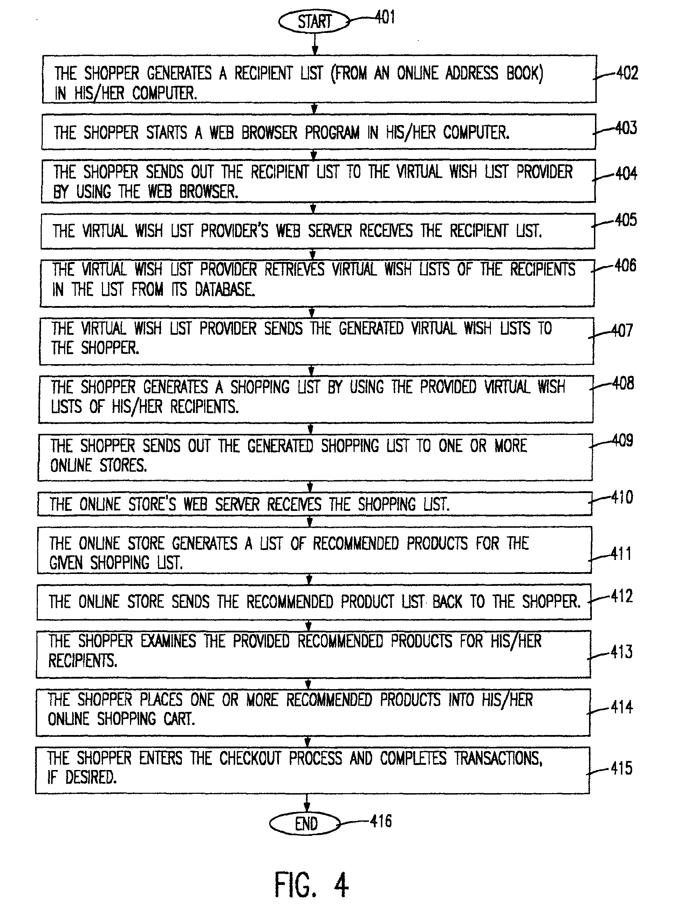

Figure 4 is a flow chart of another preferred business process for using virtual wish lists. This flow chart describes the business process happening in the system architecture given in Figure 3. The first two steps 402 and 403 are the same as steps 202 and 203 of Figure 2. After a recipient list 702 is ready, the user 101 sends it out to one or more virtual wish list providers 130 by using the Web browser program 103 and the network in step 404. When a virtual wish list provider 130 receives a recipient list in step 405, it retrieves and/or searches one or more virtual wish lists 900 for each recipient 140 from its database in step 406. The details of this retrieval and/or search step 406 is similar to those of the corresponding step 210 in Figure 2. For reasons of privacy, the user 101 may need to obtain an approval from his or her recipients 140 for accessing their virtual wish lists through the providers 130. The recipients 140 also need to notify the virtual wish list providers 130 about their approval for the users accessing virtual wish lists. The virtual wish list providers 130 sends the prepared virtual wish lists 900 of the recipients 140 in the recipient list 702 back to the user 101 who requested them in step 407.

When the user 101 receives the virtual wish lists 900 from all the providers which the user sent out his or her requests to, the user may need to merge them together for review, manually or by using a computer program. The user 101 examines the virtual wish lists of recipients in his or her recipient lists, understands their needs and tastes, and creates a shopping list 1100 which may include one or more constraints in various terms: the user's budget, the product price, the attributes of products such as colour, size and brand, the product categories, and the relationship among products and their attributes in step 408. This shopping list 1100 is sent to one or more online stores in step 409 and will be input to one or more product list generator program 122 of the online stores in a later step.

When an online store 120 receives a shopping list 1100 from the user 101 by using the Web server program 121 and the network in step 410, it passes it to the product list generator program 122 which creates a list of recommended products 1200 for the given shopping list in step 411. The online store 120 sends the recommended product list 1200 it generated back to the user 101.

When the user 101 receives the recommended product lists 1200 from all the online stores 120 the user sends his or her shopping list 1100 to, the user 101 can examine the recommended products for his or her recipients in step 413. If desired, the user 101 can tag one or more recommended products in the list 1200 and request a new set of product recommendations by sending the tagged list to one or more online stores 120. When satisfied with the provided recommended products, the user 101 places one or more recommended products into his or her online shopping cart in step 414. Finally, the user 101 enters the check-out process and completes transactions, if desired in step 415. The details of the last two steps 414 and 415 are similar to those of the process described in Figure 2, and are not repeated here.

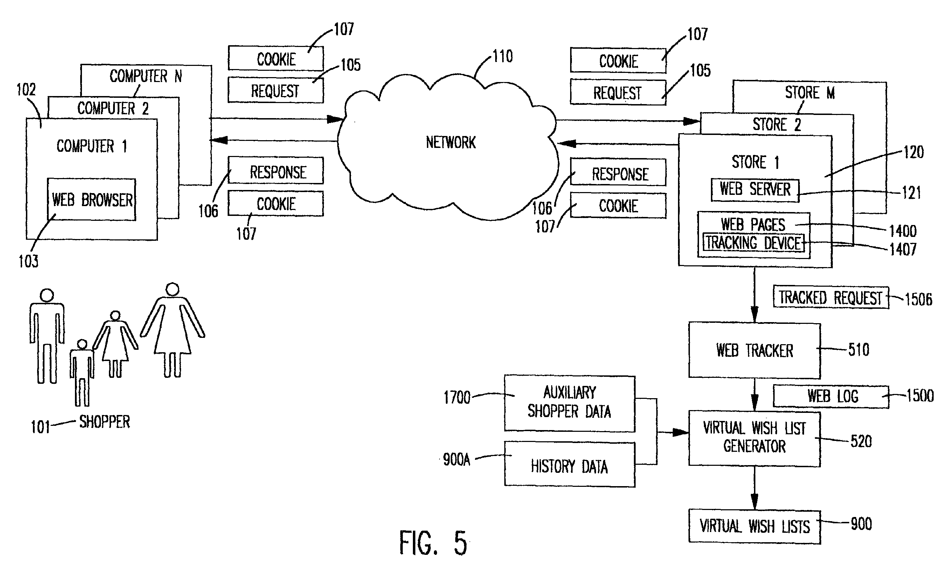

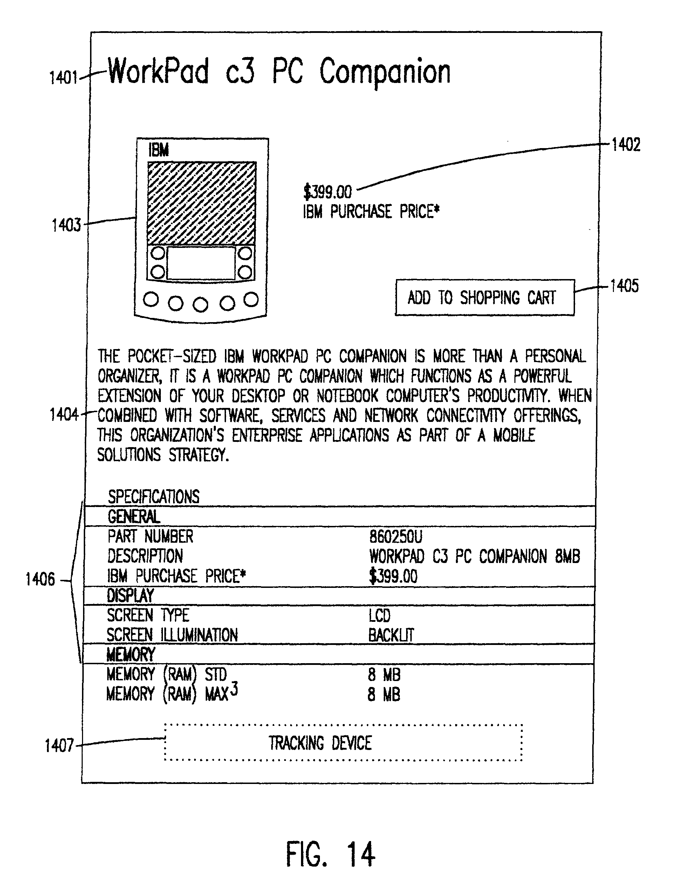

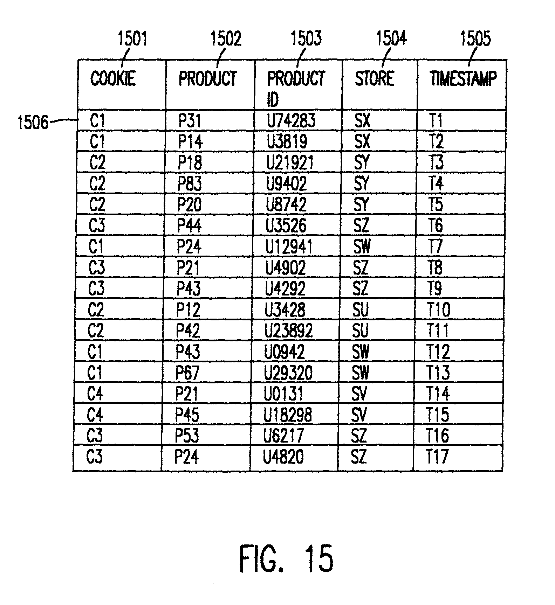

Figure 5 is a block diagram of one preferred system architecture for generating virtual wish lists showing one or more users 101, one or more computers 102 used by the users, one or more Web browser programs 103 used by the users, one or more requests 105 from the users, one or more responses 106 to the users, one or more cookies 107, computer network 110, one or more online stores 120 in the network, one or more Web server programs 121 used by the online stores, one or more Web pages 1400 (shown in more detail in Figure 14), one or more tracking devices 1406 embedded in the Web pages, one or more tracked requests 1506, a Web tracker 510, one or more Web log files 1500 (shown in more detail in Figure 15), a virtual wish list generator 520, a set of auxiliary user data 1700, a set of history data 900A, and one or more virtual wish lists 900.

Users 101 visit online stores 120 in the network 110 to purchase and/or obtain information of products sold in the stores. To access information from online stores 120, users 101 use Web browser programs 103 in their computers 102 and make requests 105 for one or more Web pages 1400. Online stores 120 use Web server programs 121 to send back responses 106 to the users 101 in the form of Web pages 1400 describing one or more products and/or giving one or more links to Web pages supporting commerce activities such as online shopping carts and check-out pages. Web page requests 105 made by users 101 to online stores 120 can be recorded in one or more of Web log files 1500 by using tracking devices 1406 embedded in Web pages. These tracking devices 1406 are a small computer program that is embedded in a Web page and invoked when the Web page is requested to record relevant information about the request 1506 in the Web log 1500.

Those Web page requests 1506 recorded in Web logs 1500 can be grouped by user and by session which is defined as a series of Web pages requested by a user in a single visit. This grouping of Web page requests 1506 can be done in an accurate and reliable manner if the requests are recorded with a certain user identification information such as cookie 107. A cookie is a piece of information shared between a user's Web browser program 103 and a Web server program 121, in this case, the Web tracker 510, originating as a message by a Web server program 121 to the Web browser program 103 visiting the server's Web site 120, subsequently stored in a text file on the hard drive of the user's computer 102, and sent back to the server 121 each time the Web browser 103 requests a Web page 1400 from the server 121. The cookies 107 help identify users 101 because their values are unique for each Web browser 103.

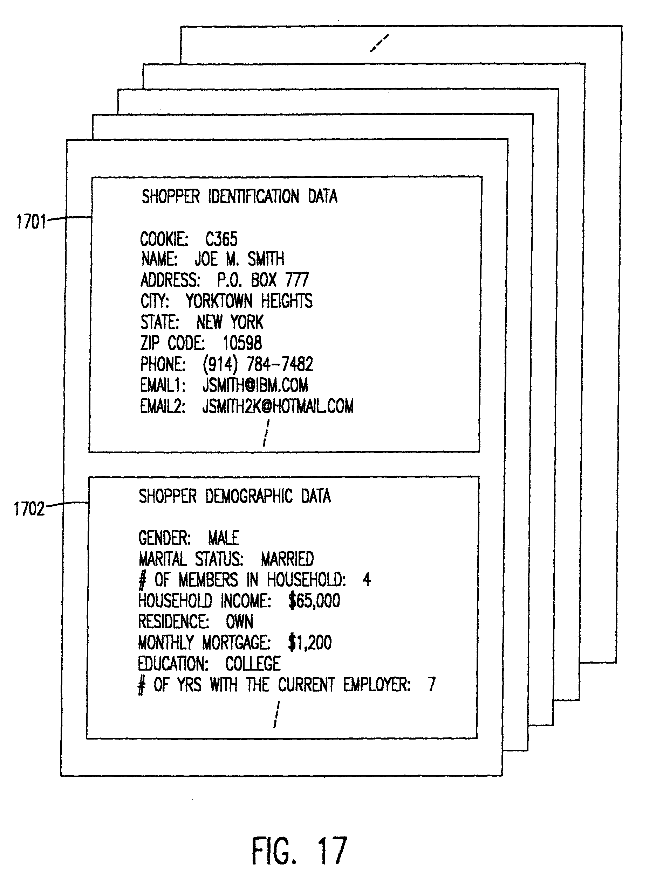

Virtual wish list generator 520 periodically (for example, once a day) receives Web logs 1500 as input where Web page requests 1506 are grouped by session and by user. It combines this input data with other auxiliary user data 1700 (shown in more detail in Figure 17) such as demographic data, creates and/or updates virtual wish lists 900 of the users, and stores them in a database system for the use by one or more virtual wish list providers 130. When a virtual wish list is first created for a user, the virtual wish list generator 520 and/or the virtual wish list provider 130 ask the user for an approval of using his or her virtual wish list for product recommendations. The user may approve or disapprove the use of the virtual wish list. The user can disapprove the use of the virtual wish list for various reasons including for privacy reasons. If the user approves the use of the virtual wish list, the user becomes the owner of the list, and allows selectively other users and online stores to use the virtual wish list.

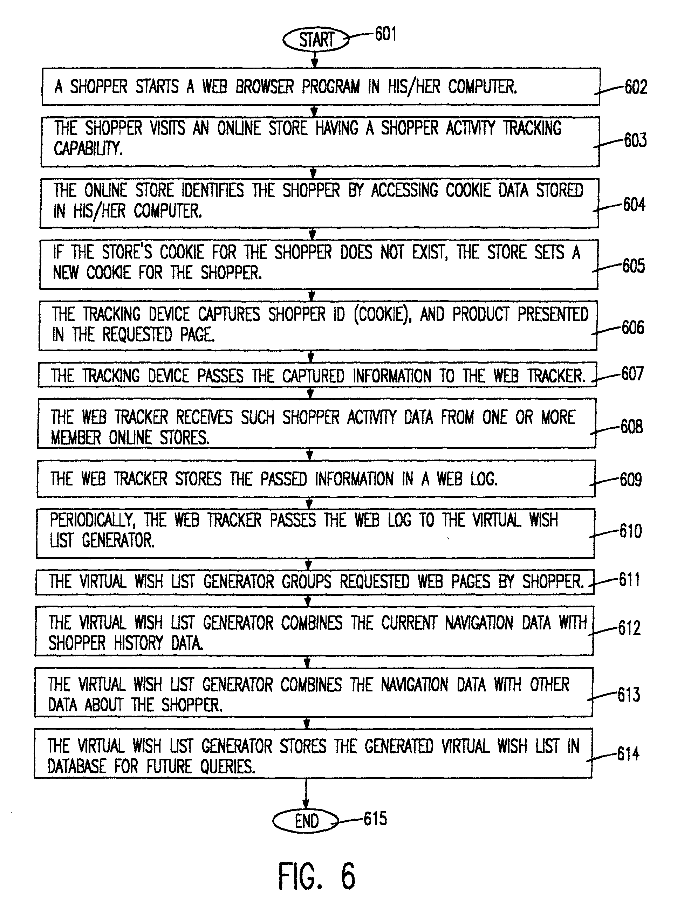

Figure 6 is a flow chart of a preferred business process for generating virtual wish lists. First, a user 101 starts a Web browser program 103 in his or her computer in step 602, and visits one or more online stores 120 in the network in step 603. We assume that the online stores 120 the user 101 visits have a capability of tracking user navigation at Web sites, for example, by embedding tracking devices 1406 in their Web pages 1400. The online store 120 visited by the user 101 identifies the user by using cookie data 107 stored in the user's computer in step 604. If the store's cookie does not exist in the user's computer 102, the store's Web server program 121 sets a new cookie for the user. Namely, it sends out a new cookie string to the user's Web browser 103 which stores the value in the user's computer 102 for later communications between the browser 103 and the server 121.

For each Web page request 105 from the user 101, the tracking device 1406 embedded in the requested Web page 1400 is invoked and captured such information as the user's identification or ID (i.e., the user's cookie), the products, if any, presented in the Web page, and the store presenting the Web page, and the time stamp in step 606. The information captured by the tracking device 1406 is passed to the Web tracker in the form of a tracked request in step 607, and stored in the Web log in step 609. The Web tracker 510 receives one or more tracked requests 1506 from one or more online stores which have a capability of tracking user navigation at Web sites in step 608. In real-time or periodically (for example, once a day), the data stored in the Web log 1500 is passed to the virtual wish list generator 520 which creates and/or updates the virtual wish lists 900 of users 101 whose Web page requests 105 are captured in the Web log 610.

The virtual wish list generator 520 first groups Web page requests 1506 stored in the Web log 1500 by user and session in step 611. Then it combines the current navigation data, i.e., Web page requests in the current Web log 1500 with historical navigation data 900A of each user found in the current Web log in step 612. Then, the virtual wish list generator 520 combines the navigation data with other data about the found users, if necessary and/or available in step 613. Finally, it stores the created virtual wish lists 900 in database for future use by one or more virtual wish list providers 130 in step 614.

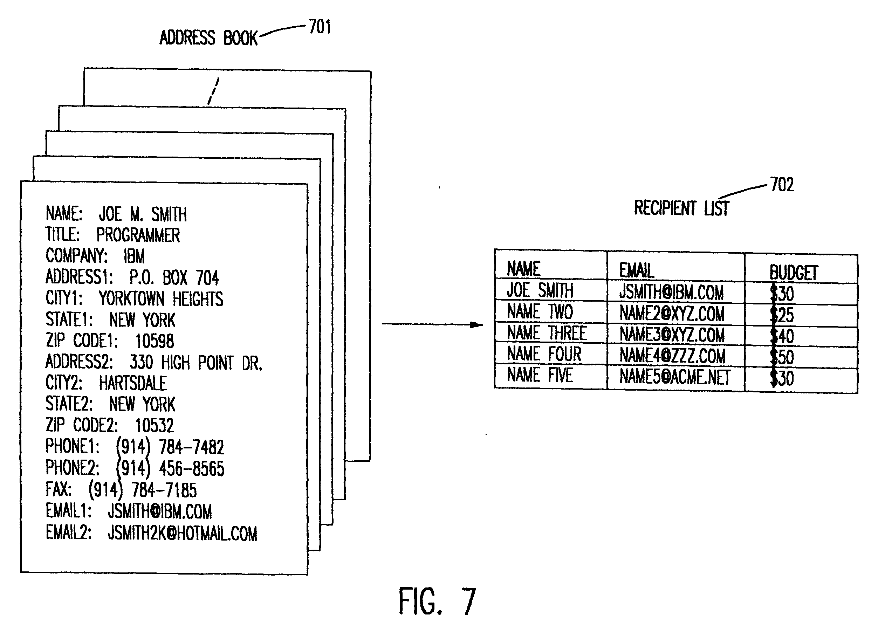

Figure 7 is a block diagram showing an online address book and a recipient list 700. An online address book 701 is a computer program that helps the user store and manage information about people they need to communicate with. While the type of data can vary from one address book to another, most of them allow to store, as shown in this figure, one or more of names, titles, affiliations, post-mail addresses, phone numbers, fax numbers, and e-mail addresses. When a user 101 wants to purchase products for one or more of other people, the user can use one or more address books to prepare the list of recipients of products 702. The recipient list needs to include certain recipient identification information such as name and e-mail address. E-mail addresses are particularly useful (as compared with post-mail addresses) for identifying people among Web sites in the network 110. Other identification information may include cookie data, user codes and passwords, and social security numbers which are harder to use for this purpose for privacy reasons. The recipient list 702 may include one or more constraints for shopping. This figure shows one example constraint which is a price limit for each product recipient.

Figure 8 is a block diagram showing actual wish lists 800 of an online store. A wish list is a shopping tool available in a number of online stores. The user 101 can create a wish list in an online store 120 and record information on products the user wants to buy from the store in the list. The store 120 keeps the product information for a definite period of time, e.g., a year. The user 101 or people who obtained an approval from the user can access the list anytime and make one or more transactions for purchasing one or more products stored in the list. Some online stores extend their shopping cart service to provide the wish list capability to some degree. However, such shopping carts store the product information for a shorter period of time, e.g., ninety days. A wish list helps its users purchase a product bundle at one time from an online store. It is different from the present invention because it requires the users to choose one or more products to buy. A wish list typically comprises the user identification information 801 and product entries 802. The user identification information 801 includes name, e-mail address, and user number in this online store, among others. Each product entry 802 includes the product name 803, the product ID 804 (in case that the product name is not sufficient to identify products), the time stamp 805 indicating when this product entry was made, and the occasion 806 related to this product purchase, if any.

Figure 9 is a block diagram showing virtual wish lists 900 which are created by the virtual wish list generator 520 and used by the virtual wish list providers 130 for making relevant product recommendations when a user purchases products for other people. A virtual wish list includes the following three types of information about its owner: the user identification data 901, the user demographic data 902, and the user navigation data 1000. The user identification data 901 contains such data as the owner's name, the post-mail address, the phone number and the e-mail address. The user demographic data 902 contains such data as the gender, the marital status, the number of members in the household, the household income, the education level, and so on, if available.

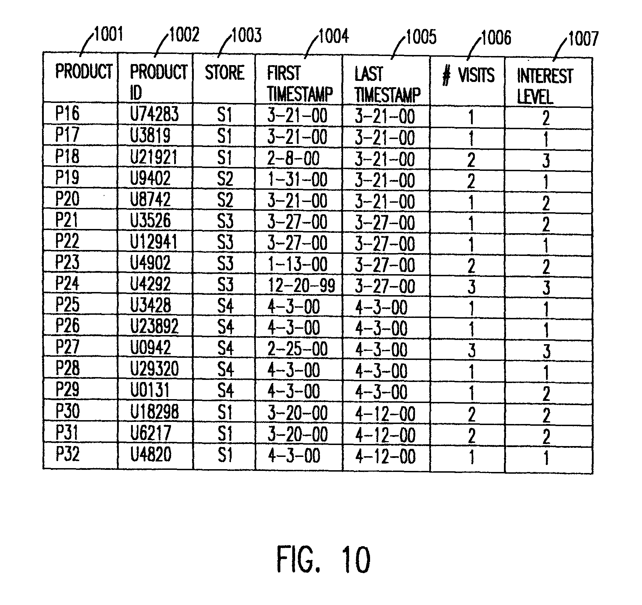

Figure 10 is a block diagram showing user navigation data which is part of virtual wish lists 900 providing information about products the owner of the virtual wish list is interested in based on his or her visits to the products' Web pages. An entry is given for each product whose Web page the user visited one or more times, and provides the name of product 1001, the product ID 1002, the name of the store presenting the product to the user 1003, the time stamp of the user's first visit 1004, the time stamp of the user's last visit 1005, the total number of the visits of the user to the product's Web page 1006, and the interest level 1007. This information is useful to make relevant product recommendations.

In particular, the last field, the interest level 1007, shows how much the user is interested in this product in a number, for example, "1" meaning low, "2" medium, and "3" high. The interest level 1007 can be calculated in many different ways. Examples of factors that are taken into account for the calculation include frequency and recency of visits, and how closely the user went to the purchase of the product. A user goes through a number of steps before purchasing a product in an online store. First, the user sees a hyperlink to the Web page of the product. Second, the user clicks on the hyperlink and examines the Web page presenting the product. Third, the user places one or more units of the product in his or her online shopping cart. Finally, the user enters the check-out process and completes the purchase of the product. If a user places an item of product A into his or her cart, while the user only views the Web page of product B, it is believed that the user is more interested in product A than product B. It is expected that the interest level of product A is higher than that of product B for this user in the user navigation data section of the virtual wish list.

Figure 11 is a block diagram showing a shopping list 1100 (Figure 3) which is created by a user 101 and provided as input to one or more product list generators 122 of online stores 120. In Figure 3, it is assumed that a user can refer to virtual wish lists 900 of his or her recipients 140 to create a shopping list 1100. Therefore, a shopping list can include for each entry a recipient field 1101 and a number of fields giving product information 1103 (the product name 1107, the product ID 1108, and the interest level 1109) from the virtual wish list 900. Also, a shopping list 1100 may include one or more constraints 1102 in various terms: the user's budget 1104, the product price, the attributes of products such as colour 1105, size 1106 and brand, the product categories, and the relationship among products and their attributes 408.

Figure 12 is a block diagram showing a recommended product list 1200 which a product list generator 122 of an online store 120 creates for a shopping list 1100 given as input. Basically, each entry of a product list 1200 corresponds to an entry in the given shopping list 1100, and gives more detail information of the product available in the store 120 such as price 1203, size 1204 and colour 1205. The recipient field 1201 and product fields (e.g., product name 1206, product ID 1207, and interest level 1208) are inherited from the shopping list 1100. Sometimes it is possible that certain products suggested in the shopping list (which uses the information from virtual wish lists) are not available in the store 120 where the shopping list 1100 is submitted. Then the store 120 may not be able to have entries for such products in the recommended product list 1200.

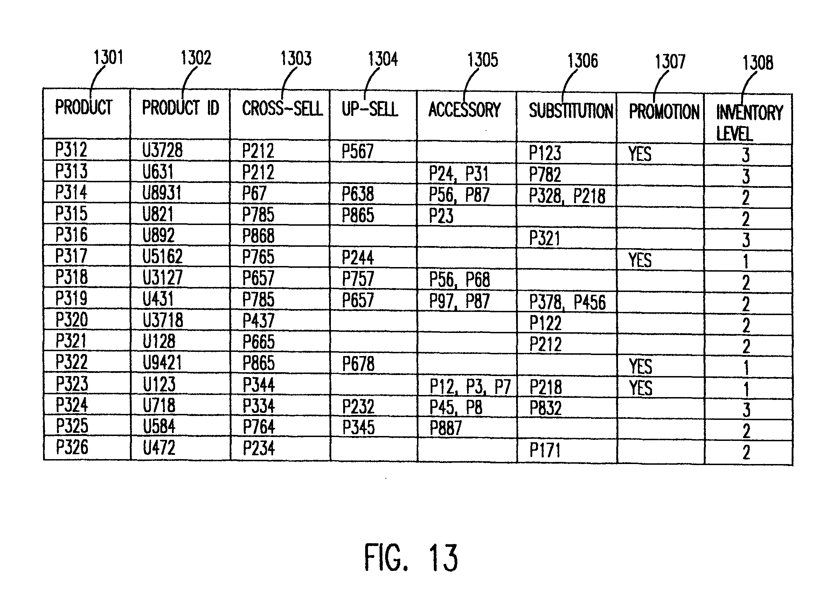

Alternatively, the store 120 may recommend a substitution product 1210 which functions in a similar way as the original product. Also, the store 120 may include certain accessory products 1211 or up-sell products in the product list 1200 though they are not included in the given shopping list 1100. To suggest substitution, accessory, cross-sell, up-sell, and promotion products, online stores 120 use the merchandising data table shown in Figure 13.

Figure 13 is a block diagram showing merchandising data which is used by a product list generator 122 of an online store 120 to suggest products that are not included in the given shopping lists 1100, but help make the recommended product list more useful and improve the revenue of the store 120. Each entry of the merchandising data table includes for each product the product name 1301, the product ID 1302, the cross-sell products 1303, the up-sell products 1304, the accessory products 1305, the substitution products 1306, the indicator of promotion 1307, and the inventory level 1308. The inventory level 1308 can be represented in numbers, for example, "1" meaning high, "2" medium, and "3" low.

Figure 14 is a block diagram showing a product Web page 1400 (Figure 5) embedding a tracking device. The product Web page provides various information about one or more products including the product name 1401, the price 1402, an image of the product 1403, a short description 1404, a button to add the product to an online shopping cart 1405, and a detail product specification 1406. A tracking device is a small computer program that is embedded in product Web pages. The tracking device is invisible to users 101, and is invoked each time the Web page is requested by a user 101. The tracking device captures information about the user and the product(s) presented in the Web page, and passes the captured information to the Web tracker 510 which stores the information in the Web log.

Figure 15 is a block diagram showing a Web log 1500 (Figure 5) which stores the information about Web page requests 1506 by users. Web logs 1500 are created and managed by the Web tracker 510 which receives one or more tracked Web page requests 1506 from one or more online stores 120, stores them in Web logs 1500, and passes the Web logs to the virtual wish list generator 520 periodically (e.g., once a day) or in real time. Each entry in a Web log 1500 is a tracked Web page request 1506 which includes the cookie 107 and 1501 identifying the user who makes the request 105, the product name 1502, the product ID 1503, the store presenting the Web page 1504, and the time stamp for the request 1505. The entries in a Web log 1500 are typically ordered by time stamp, and so requests from different users 101 and from different online stores 120 are interleaved.

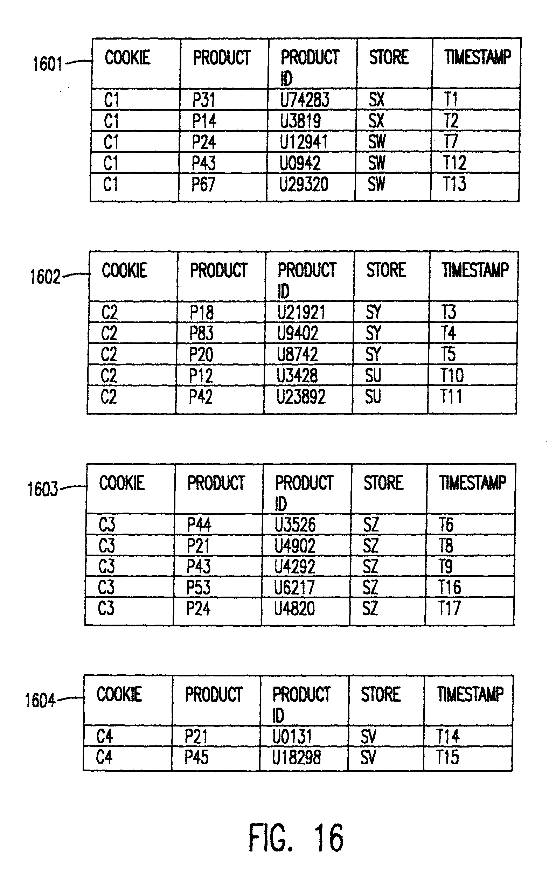

Figure 16 is a block diagram showing an example of a Web log grouped by user. Web page requests recorded in a Web log 1500 can be grouped by user and by session. The first table 1601 presents Web page requests made by a user who is identified by the cookie value, C1, the second 1602 presents Web page requests by a user who is identified by the cookie value, C2, and so on. Entries in these session tables are the same as the entries in the Web log 1500.

Figure 17 is a block diagram showing auxiliary user data 1700 (Figure 5) which is integrated with user navigation data presented in Figure 16 by the virtual wish list generator 520 to create virtual wish lists 900. The virtual wish list generator 520 uses a key common to the user navigation data 1600 and auxiliary user data 1700 such as cookie for the integration. The auxiliary user data may contain various types of data that are useful for making relevant product recommendations including user identification data and demographic data.

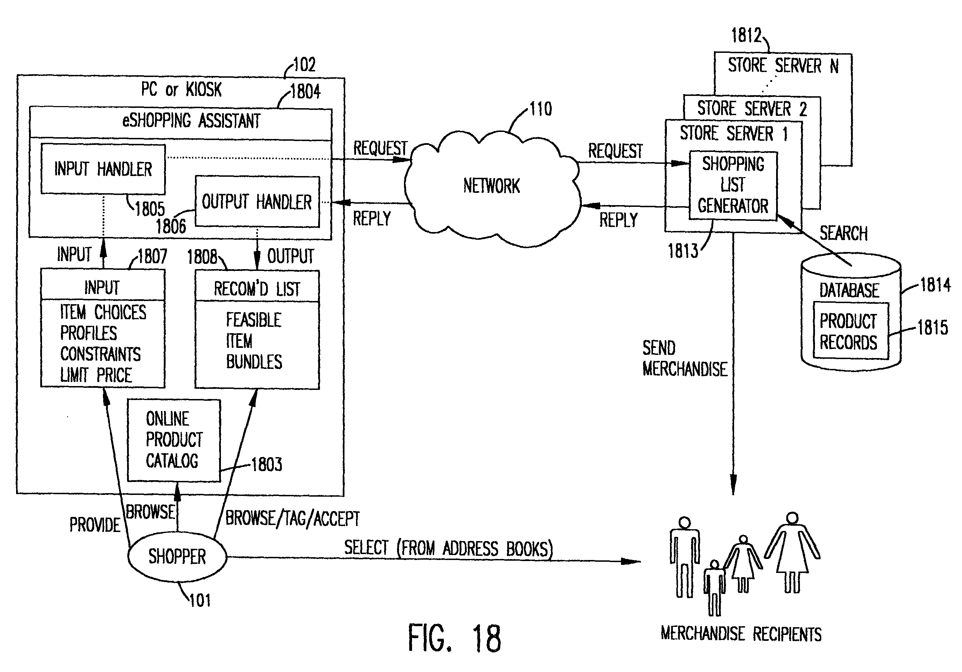

Figure 18 shows a block diagram of one preferred system architecture of the electronic shopping assistant, showing one or more users 101, one or more computers 102 used by the users, an online product catalogue 1803 accessed by a Web browser and used by the users, a computer network 110, such as the Internet, and one or more online store servers 1802 in the network for one or more online stores in the network. The online product catalogue 1803 may include one or more product identification numbers, a product name, one or more product categories, one or more product attribute values including product size, product colour, product price, product gross margin percentage, on-hand inventory in weeks of supply, and one or more priority indices including priority index by margin, priority index by inventory, and an overall priority index. The priority index of a product is an attribute of a product that represents a store's preference for selling in comparison to other products in the store.

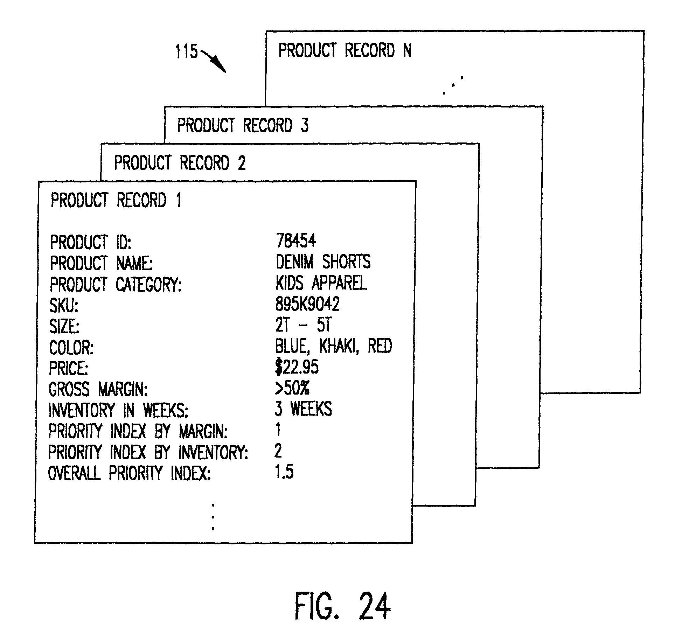

A shopping list generator process 1803 runs on the online store servers 1802. The shopping list generator process 1803 is a component of the electronic shopping assistant process 1804 that searches products in an online product catalogue stored in a product database 1804, and computes one or more lists of product combinations that satisfy the constraints given in the input. Thus, the electronic shopping assistant process 1804 and the shopping list generator process 1803 may be viewed as a client/server application process with the shopping list generator process 1803 being the back end process and the electronic shopping assistant process 1804 being the front end process. The database 1804 accessed by the online store servers 1802 contains product records 1805 that are used to generate a shopping list based on a user's input. An example of product records 1805 stored in database 1804 is shown in Figure 24. As seen in Figure 24, the product database stores one or more product identification numbers, one or more product records 1805, each of which stores one or more product identification numbers, one or more product names, one or more product categories, one or more product attribute values including product size, product colour, product price, product gross margin percentage, on-hand inventory in weeks of supply, and one or more priority indices including priority index by margin, priority index by inventory, and an overall priority index.

The electronic shopping assistant 1804 installed on the computer (which may be installed in a kiosk) includes an input handler 1805 and an output handler 1806 for respectively communicating a request and receiving a reply over the network 110 using an electronic shopping list protocol. The electronic shopping list protocol allows the sending and receiving of one or more inputs of constraints and one or more outputs of lists of recommended product combinations, between one or more electronic shopping assistant processes and one or more shopping list generating processes over one or more networks. The electronic shopping list protocol is a network protocol that the electronic shopping assistant and shopping list generating processes use to communicate with each other over the network. Because the electronic shopping list process is running on the Web server 1802 of an online store on the Internet, the processes communicate with each other by using the HyperText Transfer Protocol (HTTP). The electronic shopping list protocol comprises a set of types and format of data sent back and forth between the electronic shopping assistant and the shopping list generating processes on top of HTTP. The input handler 1805 receives input 1807 from a user 101. This input includes such information as item choices, profiles, constraints, and limit price. The profile constraints provide information about one or more recipients of products for which the user shops, the recipient information comprising an identification including name, gender, age and address, and product information including category, size, colour and brand, and budget information.

The shopping list constraints comprise one or more budget constraints that specify one or more conditions on a cost for individual product recipients and a total cost, one or more product constraints that specify one or more conditions for product attributes including category, size, colour and brand, one or more inter-item constraints that specify one or more conditions on a relationship among products and their attributes, and one or more multiple choice constraints that specify one or more conditions on a number of products given to recipients. The limit price is an offer by a user to buy a product item at a suggested price with an expiry data. The output handler 1806 provides recommended product lists 1808 to the user 101.

The recommend product lists include feasible item bundles based on the user's input constraints, limit price, etc. The list of product combinations may also comprise one or more products sold in one or more online stores that satisfy the constraints given by the electronic shopping assistant as a set. The electronic shopping assistant process compiles one or more lists of recommended product combinations received from one or more stores, to create one or more recommended product lists and displays one or more lists of recommended product combinations to users. The electronic shopping assistant process provides an interactive interface for a user allowing the user to browse one or more lists of feasible product bundles with products presented in one or more online product catalogues, and tag one or more products in the lists and the catalogue. Using this interface, a user submits an input including one or more products tagged from the online product catalogue and the feasible product bundles in a previous submission.

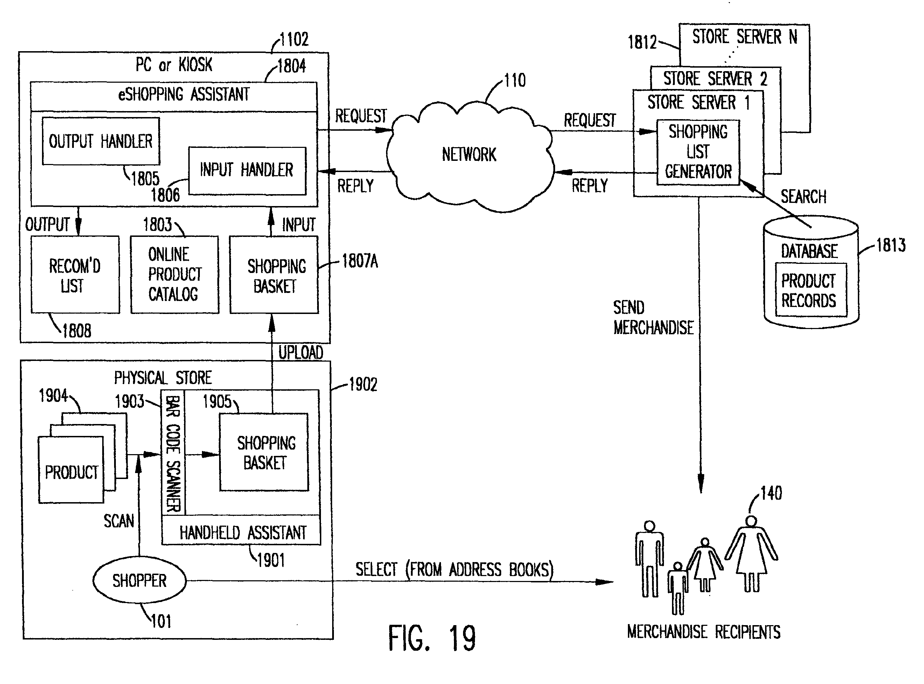

An alternative embodiment shown in Figure 19 contemplates the use by the user 101 of a hand held shopping assistant 1901 in a physical store 1902, as opposed to an online store. The shopping assistant 1901 may take the form of a personal digital assistant (PDA) having a bar code scanner 1903 capable of reading the Universal Product Code (UPC). In this case, the user carries the shopping assistant 1901 around the store and, upon selecting a product 1904, simply scans the bar code on the tag applied to the product. The scanned code is input to a "shopping basket" 1905, typically software program storing product identifications in cache memory in the shopping assistant 1901. In other words, instead of browsing a store's online product catalogue, the user views actual samples of the products in the physical store and makes a selection by scanning the bar code of a label applied to the product. When the user has finished shopping, or at any time during the process of shopping, the user 101 takes the hand held shopping assistant 1901 to the computer 102, installed for example in a kiosk in the physical store 1902, and uploads the product identifications stored by the "shopping basket" to the input 1807A of the computer 102. This may be accomplished by a physical connection (e.g., a serial port or "firewire" connection) or a wireless connection, typically an infrared (IR) port.

Such a "shopping basket" can then be used in a variety of ways: (i) to construct constrained limit orders as discussed above or (ii) to identify additional products from a Web catalogue that match specific items in the list. Such a facility would tremendously enhance the shopping experience of a user by integrating the advantages of the real with the cyber aspects of shopping. It would also present a tremendous benefit to the brick-and-mortar retailers since their Web catalogues can now be mapped to a shopping experience. On the down side is the danger (for retailers) that users might construct a basket while experiencing it at the department store and then ordering the items from an alternate Web catalogue. However, technological innovations that enhance UPC codes to allow retailer identity to be tagged could provide a means for charging for the shopping experience from other e-tailers who satisfy the demand. Most critically, the service of providing constrained limit orders would enhance customer loyalty.

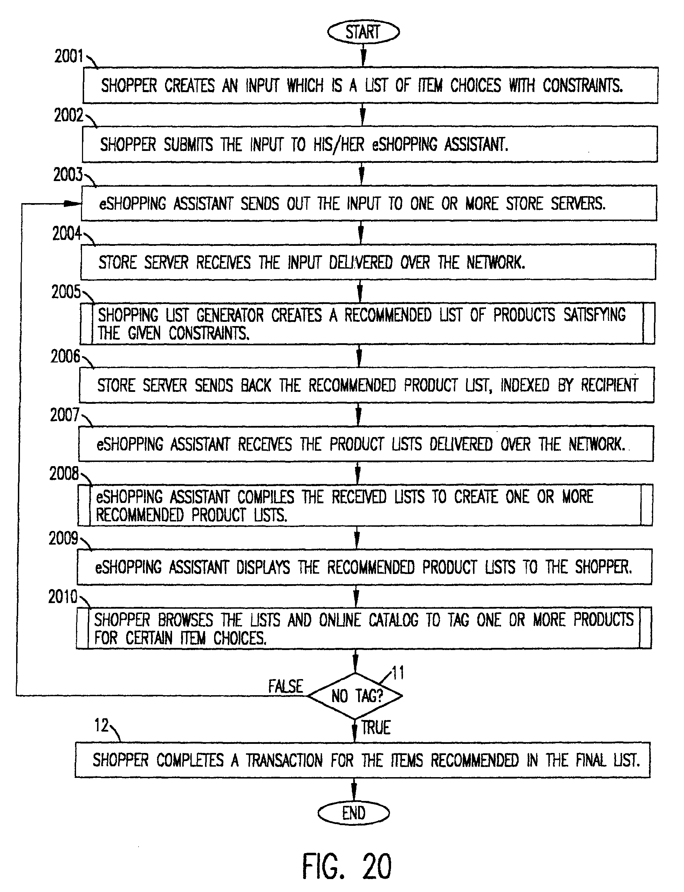

The process is generally illustrated in Figure 20. The user 101 creates an input which is a list of item choices with constraints in function block 2001. The user then submits the input to his or her electronic shopping assistant 1804 in function block 2002. The electronic shopping assistant sends out the input to one or more store servers 1802 in function block 2003. The store server 1802 receives the input delivered over the network 110 in function block 2004, and the shopping list generator running on the server creates a recommended list of products satisfying the given constraints in function block 2005. The server 1802 then sends back the recommended product list, indexed by recipient, in function block 2006. The electronic shopping assistant 1804 receives the product lists delivered over the network 110 in function block 2007 and then compiles the received lists to create one or more recommended product lists in function block 2008. The recommended product lists are displayed by the electronic shopping assistant to the user in function block 2009. The user can now browse the lists and the online catalogue 1803 to tag one or more products for certain item choices in function block 2010. A test is made in decision block 2011 to determine if there is a tag. If not, the process goes back to function block 2003 to again send input to one or more store servers 1802. If, however, the user has tagged certain items choices, the user can then complete a transaction for the items recommended in the final list in function block 2012.

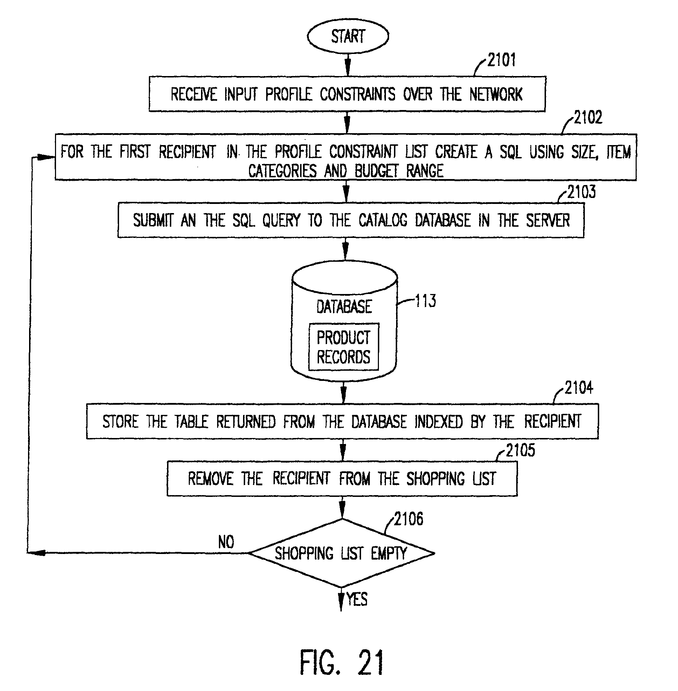

Figure 21 is a flow chart of the shopping list generator process implemented on a store server 1802. The user's input profile constraints are received over the network 110 in function block 2101. For the first recipient in the profile constraint list, a Structured Query Language (SQL) query is created using size, item categories and budget range in function block 2102. The SQL query is submitted to the catalogue database 1803 in the server in function block 2103. The table returned from the database is stored, indexed by recipient, in function block 2104. The recipient is then removed from the shopping list in function block 2105. A test is then made in decision block 2106 to determine if there are any more recipients in the shopping list. If so, the process loops back to function block 2102 to process the next recipient in the list; otherwise, the process provides a return to the computer 102 via the network 110.

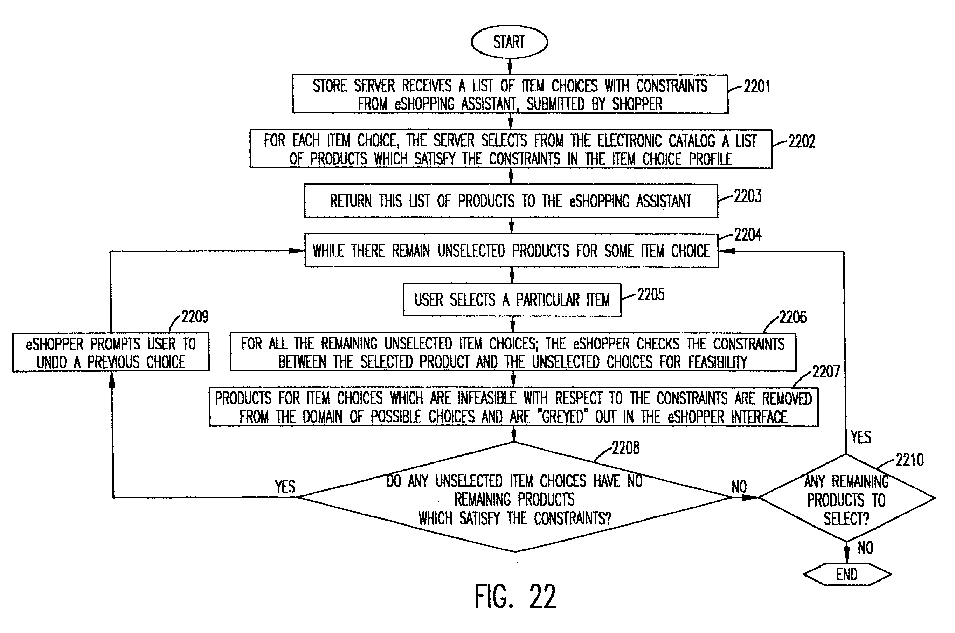

Figure 22 is a flow diagram of the business process for generating a recommended list of products implemented on the computer 102. Under the scenario assumed, the list of products returned by the server all satisfy the profile constraints; however, not all combinations of choices satisfy the shopping list constraints. The user interactively selects products and is guided by the electronic shopping assistant to make selections satisfying the shopping list constraints. The process begins by the store server 1802 receiving a list of item choices with constraints submitted by the user from the electronic shopping assistant 1804, in function block 2201. For each item choice, the store server 1802 selects from the electronic catalogue a list of products which satisfy the constraints in the item choice profile in function block 2202. The server then returns the list of products to the electronic shopping assistant in function block 2203. A processing loop is entered at function block 2204 which continues while there remain unselected products for some item choice. The user selects a particular item in function block 2205. For all the remaining unselected item choices, the electronic shopping assistant 1804 checks the constraints between the selected product and the unselected choices for feasibility in function block 2206. In function block 2207, products for item choices which are infeasible with respect to the constraints are removed form the domain of possible choices and are "greyed" out in the electronic shopping assistant's graphic user interface (GUI). A test is made in decision block 2208 to determine if any item choices which have no remaining products satisfy the constraints. If so, the electronic shopping assistant 1804 prompts the user to undo a previous choice in function block 2209, and then the process loops back to function block 2204. If there are no item choices which have no remaining products which satisfy the constraints, a test is made in decision block 2210 to determine if there are any remaining products to select. If so, the process loops back to function block 2204; otherwise, processing ends.

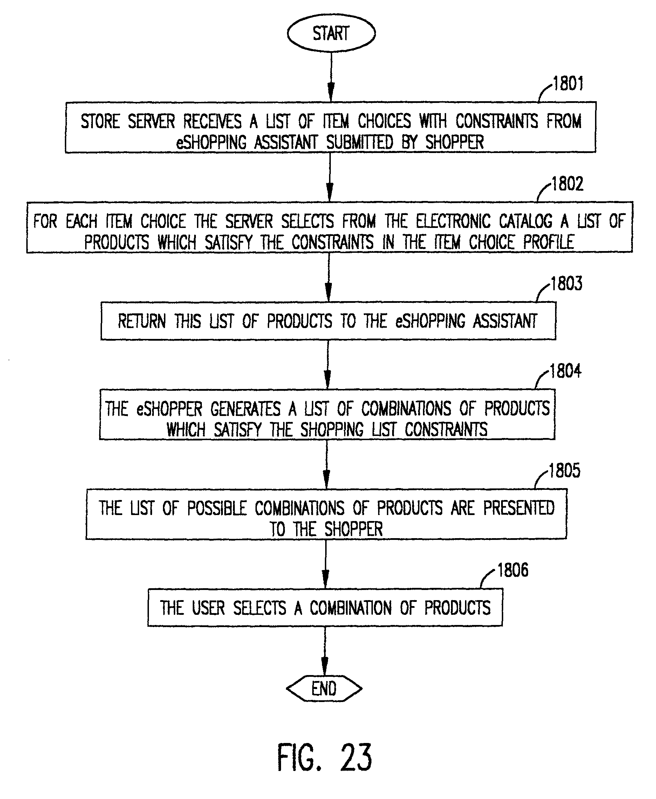

Figure 23 shows the business process for generating a recommended list of products as implemented on the computer 102. Under this scenario, the list of products returned by the store server 1802 satisfy the profile constraints and all the combination choices satisfy the shopping list constraints. The user needs only to select a single combination of products. The process begins by the store server 1802 receiving a list of item choices with constraints submitted by the user from the electronic shopping assistant 1804, in function block 2301. Then, in function block 2302, for each item choice, the server 1802 selects from the electronic catalogue a list of products which satisfy the constraints in the item choice profile. This list of products is returned to the electronic shopping assistant 102 in function block 2303. The electronic shopping assistant then generates a list of combinations of products which satisfy the shopping list constraints in function block 2304. The list of possible combinations of products are presented to the user by the electronic shopping assistant 1804 in function block 2305. At this point, the user selects a combination of products in function block 2306.

A typical scenario is holiday shopping for family and friends. In this case, the electronic shopping assistant is deployed by a department store or a large speciality store, for example. The electronic shopping assistant provides assistance by generating a recommended shopping list for family and friends for whom the user wishes to buy presents. The electronic shopping assistant takes as input a list of gift recipients, the user's preferences (such as category of item for each recipient) and constraints (such as total budget), and outputs a recommended list of items for each recipient. Note that there could be more than one item for each recipient. A typical output from the electronic shopping assistant 1804 may look like Table 1:

**Table 1**

| Recommended Gift Alternatives Generated the Electronic Shopping Assistant | | | | | | |
|---|---|---|---|---|---|---|
| Matt | CK Jean Vest | S | Blue | 1 | Apparel | 48.5 |
| | CK Khakis Pants | 30× 30 | Khaki | 1 | Apparel | 35 |
| | Sperry Cotton Shoes | 9M | White | 1 | Apparel | 40 |
| | Club Room Twill Short | 30 | Stone | 1 | Apparel | 25 |
| Sarah | Supplex Sleeveless Top | S | Black | 1 | Apparel | 55 |
| | V-neck Rosette Cardigan | S | Blue | 1 | Apparel | 49 |
| | Armani Eau de Toilette | | | 1 | Fragrance | 26 |
| Tommy | Oshkosh Denim Shorts | 2T | Blue | 1 | Apparel | 28.5 |
| | Carter Shirt for Boys | 2T | Red | 1 | Apparel | 22 |
| | Leggo Construction Truck | | | 1 | Toy | 24.95 |

Another scenario is shopping to remodel parts of a home, say a kitchen. In this case the electronic shopping assistant is deployed by a home improvement store. The electronic shopping assistant takes as inputs the list of categories of items needed (such as kitchen sink, faucet, kitchen cabinet, cooking range), the user's preference (such as colour), and constraints (such as total budget), and outputs a recommended list of items for each category.

The features of the electronic shopping assistant are described in detail next.

### Feature 1

The input required to create the recommended shopping list is a list of item choices with their profiles, and the shopping list constraints. In the holiday shopping example, the list of item choices is the list of gift recipients; in the kitchen remodelling example, the list of item choices is the list of needed item categories. The profile for each item choice is a set of attributes, known in the electronic product catalogue, that characterise the target item. The profiles essentially constrain each of the items to a certain set of choices. For the former example, the input screen of the item choices with their profiles may look like Table 2:

**Table 2**

| Input Profiles for Item Choices | | | | | |
|---|---|---|---|---|---|
| Recipient | Gender | Age | Size | Preferred Item Category | Budget Range |
| Sarah | Female | 31 | Small | Apparel, Fragrance | 25-60 |
| Matt | Male | 37 | Medium, 30×30 | Apparel | 25-60 |
| Tommy | Male | 3 | 2T | Apparel, Toys | 20-40 |

The shopping list constraints are those that apply to the entire shopping list. For example, they can be specified as follows:
Budget Constraints: Total Budget < 110
Product constraints: No more than 5 products in one product category
Inter-item constraints: The price difference in gifts for Matt and Sarah< $10
Multiple Choice Constraint: One gift for each person

The electronic shopping assistant 1804 takes these inputs, searches the product catalogue 1803, and performs the necessary computations to generate a recommended product list 1808 consisting of a set of recommended products for each item choice, based on all constraints provided (profiles and shopping list constraints). Note that the gift alternatives might be presented in forms different than that shown in Table 1. For instance, the columns might correspond to a bundle of feasible gifts which satisfy all constraints, as shown in Table 3:

**Table 3**

| Feasible Gift Bundles Suggested by the Electronic Shopping Assistant | | | |
|---|---|---|---|
| Matt | Sarah | Tommy | Total Cost |
| CK Jean Vest (48.5) | Armani Eau de Toilette (26) | Oshkosh Denim Shorts (28.5) | 102.5 |
| | | Carter Shirt (22) | 96.5 |
| | | Leggo Construction Truck (24.95) | 99.45 |
| CK Khaki Pants (35) | V-neck Cardigan (49) | Carter Shirt (22) | 106 |
| | | Leggo Construction Truck (24.95) | 108.95 |
| Club Room Shorts (25) | Supplex Top (55) | Oshkosh Denim Shorts (28.5) | 108.5 |
| | | Carter Shirt (22) | 102.5 |
| | | Leggo Construction Truck (24.95) | 105.45 |

There are two alternative ways of presenting the results of the computation:

A final shopping list can be formed from randomly choosing one (or the appropriate number) of the products recommended in each of the item choices. The recommended list displayed is such that any final shopping list formed using the above procedure satisfies all constraints. This display method significantly reduces the number of products displayed but somewhat restricts the choice of the user. The displayed list contains more products in the following way. For each item choice, each of the products recommended satisfy the item choice profile but not all shopping lists formed using the procedure described satisfy all the shopping list constraints. That is, the choice of one product may preclude the choice of some other products even though they are included in the recommended list; and

The present invention improves the usability of this type of recommended list by providing a user interface that allows the user to examine the effect of picking a particular item that looks attractive. For example, if the customer decides on the Supplex Sleeveless Top (55) for Sarah, then we can immediately infer that we cannot find items from Table 1 for both Matt and Tommy in a budget feasible way. The user interface "greys out" the entry for Matt and Tommy then.

### Feature 2

The user 101 can manually tag one or more items for a specific item choice; e.g., for a particular person in the gift list, while browsing the product catalogue. This facility allows the manual creation of potential gift lists, instead of using the entire product catalogue. There are two alternative ways to deal with constraints:

If the user provides the profile for the item choice before browsing and tagging, then each new item that is selected can be checked for feasibility before being added to the list. At the end of the browsing and tagging session the system will compute the recommended list (out of the manually selected list), taking into account the shopping list constraints.

The second way eliminates the real time checking and performs all computation at the end of the browsing and tagging session.

### Feature 3

This feature allows the user to use other methods described in Feature 1 and Feature 2 sequentially. For example, the user can input the constraints, request the system to create a recommended list automatically, then browse the recommended list and the product catalogue further to tag one or more product for certain item choices, then request the system to compute a new list, and so on.

### Feature 4

Given the profile for each item choice and the shopping list constraints, the system searches the product catalogue and computes the recommended list. This feature allows the owner of the electronic shopping assistant (i.e., the store) to customise the computation so that the recommended list shows products in each item choice that are preferred by the store, and for those shown, they are listed in the order of the store's preference. The store's preference can be defined by many different ways, depending on the business practice of the store or the particular industry segment. For example, each product in the catalogue carries a priority index (that is not shown to the user). The priority index is determined by the buyer, typically, and is dependent on factors such as profitability, on-hand inventory, or promotion strategies. The index can be set using a table such as follows:

| Gross Margin | Priority Index |
|---|---|
| >50% | 1 |
| >35% but <50% | 2 |
| <35% | 3 |

The store can choose to recommend Products that are priority 2 and above (lower priority number).

| On-hand Inventory in Weeks of Supply | Priority Index |
|---|---|
| >4 | 1 |
| >2 but <4 | 2 |
| <2 | 3 |

Another example is that the priority index is the arithmetic average of the gross margin based and the on-hand inventory based index. That is, the highest priority products to recommend to users are the ones with >50% gross margin and >4 weeks of supply on-hand.

### Extensions

### Limit Orders

Another new idea that is introduced in this disclosure is the placement of a "limit order" on the gift list. A limit order is an offer by the customer to buy an item at some price with an expiry date on the order. Additionally at any time the customer may cancel the order if it is still pending. The idea behind introducing a limit order is that customers might often be willing to wait for the price of an item to drop before buying the item. However, it is tedious for the customer to continuously monitor the price and hence a limit order provides a facility to indicate to the retailer the price point at which the user is willing to make a transaction for an item. The customer can put limit orders on all items along with budget constraints that indicates how the gift basket can be bundled. A typical limit order would require an additional column in Table 1 indicating the limit order price and one additional constraint which is the expiry date.

**Table 4**

| Recommended Gift Alternatives Generated by the Electronic Shopping Assistant | | | | | | | |
|---|---|---|---|---|---|---|---|
| Name | Item | Size | Colour | Qty | Type | Price | Limit Price |
| Matt | CK Jean Vest | S | Blue | 1 | Apparel | 48.5 | 40 |
| | CK Khakis Pants | 30× 30 | Khaki | 1 | Apparel | 35 | 30 |
| | Sperry Cotton Shoes | 9M | White | 1 | Apparel | 40 | 25 |
| | Club Room Twill Short | 30 | Stone | 1 | Apparel | 25 | |
| Sarah | Supplex Sleeveless Top | S | Black | 1 | Apparel | 55 | 35 |
| | V-neck Rosette Cardigan | S | Blue | 1 | Apparel | 49 | 40 |
| | Armani Eau de Toilette | | | 1 | Fragrance | 26 | |
| Tommy | Oshkosh Denim Shorts | 2T | Blue | 1 | Apparel | 28.5 | 20 |
| | Carter Shirt for Boys | 2T | Red | 1 | Apparel | 22 | |
| | Leggo Construction Truck | | | 1 | Toy | 24.95 | |

The last column indicates the limit order. Note that items which are left blank indicates that the current price was acceptable. An additional constraint that will be added to the previous constraints list is an expiry date which specifies the date by which the order expires.

An added advantage of limit orders is for retailers. If the retailers are able to collect limit orders form a reasonable number of their customers (e.g., >1000), then they can use this information to identify the price point for various items and design promotionals based on this information. Additionally, they can identify the appropriate price at which they can sell items against.

While the invention has been described in terms of a preferred embodiment, those skilled in the art will recognise that the invention can be practised with modification within the scope of the appended claims.

## Claims

1. A computer system for generating one or more virtual wish lists of one or more users over one or more networks, the system comprising:
one or more central processing units (CPUs), one or more memories, and one or more network interfaces to one or more networks;
one or more Web page request tracking processes that are invoked each time a product Web page embedding the process is requested by a user, and capture information about the user's identity, product identity, store identity, and a time of a request in a tracked Web page request entry;
one or more Web tracker processes that receive one or more tracked Web page request entries from one or more online stores, and store the tracked Web page request entries in one or more Web logs;
one or more virtual wish list generating processes that receive one or more Web logs from one or more Web tracker processes, group tracked Web page requests in the Web logs by user, create and/or update virtual wish lists for the users found in the Web logs by merging user navigation data with one or more set of auxiliary data and historical navigation data of the user, and store created and/or updated virtual wish lists in one or more databases for future queries for product recommendations;
one or more virtual wish list approval request processes that ask a user for use of the user's virtual wish list by other users, one or more online stores, and one or more other Web sites; and
one or more virtual wish list approval processes that allow an owner of a virtual wish list to modify the virtual wish list if necessary, and to selectively approve the use of the virtual wish list by other users, one or more online stores, and one or more other Web sites.

2. A computer system for using one or more virtual wish lists of one or more users over one or more networks, the system comprising:
one or more central processing units (CPUs), one or more memories, and one or more network interfaces to one or more networks;
one or more recipient list generating processes that extract information about one or more people from one or more online address books and/or other personal database systems, and create one or more lists of people for whom the user wants to purchase one or more products;
one or more recipient list updating processes that receive one or more recipient lists from one or more users, and modify them if necessary to reflect data stored in one or more actual wish lists, and/or to reflect merchandising efforts of one or more online store;
one or more shopping list generating processes that receive one or more virtual wish lists of one or more product recipients, and create one or more shopping lists for the product recipients;
one or more virtual wish list retrieval processes that receive one or more product recipient lists from one or more users or one or more online stores, and retrieve and search for virtual wish lists for the product recipients from one or more databases;
one or more recommended product list generating processes that receive one or more recipient lists, one or more virtual wish lists, and one or more shopping lists from one or more users, one or more online stores, and one or more virtual wish list retrieval processes, and create one or more recommended product lists;
one or more virtual list use approval request processes that ask a user of the use of the user's virtual wish list by other users, one or more online stores, and one or more other Web sites; and
one or more virtual list use approval processes that allows the owner of a virtual wish list to modify the virtual wish list if necessary and to selectively approve the use of the virtual wish list by other users, one or more online stores, and one or more other Web sites.

3. A computer system for providing one or more lists of product combinations to one or more users over one or more networks, the system comprising:
one or more central processing units (CPUs), one or more memories, and one or more network interfaces to one or more networks;
an electronic shopping assistant process which receives one or more inputs of constraints from users, sends out the inputs to one or more shopping list generating processes in one or more stores, receives one or more lists of recommended product combinations that satisfy the given constraints, and allows users to view and select one or more product combinations from received lists; and
a shopping list generating process which receives one or more inputs from the electronic shopping assistant process by using an electronic shopping list protocol, searches products in an online product catalogue stored in a product database, computes one or more lists of product combinations that satisfy the constraints given in the input, and sends lists of product combinations back to the electronic shopping assistant process again by using the electronic shopping list protocol.

4. A method for generating virtual wish lists over a computer network comprising the steps of:
receiving one or more product Web page requests over one or more computer network interfaces;
capturing one or more Web page requests in one or more tracked Web page request entries;
storing one or more tracked Web page request entries in one or more Web logs;
grouping one or more tracked Web page request entries by shopper;
merging one or more tracked Web page request entries of one or more shoppers with one or more sets of auxiliary data and a set of historical navigation data of the shopper, creating one or more new virtual wish lists for new shoppers;
updating one or more existing virtual wish lists for existing shoppers;
storing one or more new and updated virtual wish lists in one or more databases;
asking one or more new shoppers if they approve the use of their virtual wish lists by one or more sets of other shoppers, online stores, and other Web sites;
receiving one or more approvals and disapprovals from the shoppers on the use of their virtual wish lists; and
recording the approvals and disapprovals along with the corresponding virtual wish lists in one or more databases.

5. A method for using virtual wish lists over a computer network comprising the steps of:
creating one or more recipient lists from one or more online address books and/or personal databases;
sending one or more recipient lists to one or more online stores and/or other Web sites over one or more computer network interfaces;
updating one or more recipient lists if necessary to reflect data stored in one or more actual wish lists and/or to reflect the merchandising efforts of one or more online stores;
asking one or more owners of virtual wish lists if they approve the use of their virtual wish lists by one or more other shoppers, online stores, and other Web sites;
receiving one or more approvals and disapprovals from the virtual wish lists owners on the use of their virtual wish lists;
retrieving and/or searching for virtual wish lists for one or more recipients specified in one or more recipient lists;
creating one or more shopping lists by merging one or more recipient lists and one or more virtual wish lists retrieved for the recipient lists;
receiving one or more shopping lists over one or more computer network interfaces;
creating one or more lists of recommended products for one or more received shopping lists;
placing one or more recommended products into one or more online shopping carts; and
completing one or more transactions for recommended products.

6. A computer implemented method for generating one or more recommended shopping lists over a network comprising the steps of:
preparing one or more inputs to a computer network interface comprising item choices, profiles, and constraints;
sending an input over the network to one or more stores, the input having an electronic shopping list protocol;
computing one or more lists of recommended product combinations satisfying the constraints in the input; and
receiving the lists of recommended product combinations over the network, displaying products in the lists, and resending one or more new inputs to one or more stores over the network.
